# EUROPEAN PATENT APPLICATION

(11) **EP 4 814 068 A1**
(43) Date of publication of application: **30.09.2026**
(21) Application number: 26167097.0
(22) Date of filing: 24.03.2026
(51) Int. Cl.: C09D 11/38, C09D 11/36

(54) **INK JET INK COMPOSITION AND RECORDING METHOD**

(30) Priority: 26.03.2025 JP 2025051302
(71) Applicant: Seiko Epson Corporation, Tokyo 160-8801 (JP)
(72) Inventor: GOZU, Sena, Suwa-shi, 392-8502 (JP)
(74) Representative: Lewis Silkin LLP

(57) **Abstract**

Provided is an ink jet ink composition that is a water-based ink jet ink composition. The ink jet ink composition contains a moisturizer A having a solubility in water at 20°C of 850 g/L or more and a melting point of higher than 25°C, an organic solvent A that is a 1,2-alkanediol having a surface tension at 25°C of 34 mN/m or less, and an acetylene glycol-based surfactant. The content of the organic solvent A is 4% by mass or more with respect to the total mass of the ink composition. The ink composition does not contain a polyol organic solvent having a standard boiling point of higher than 280°C in an amount of more than 2.5% by mass with respect to the total mass of the ink composition.

## Description

The present application is based on, and claims priority from JP Application Serial Number 2025-051302, filed March 26, 2025, the disclosure of which is hereby incorporated by reference herein in its entirety.

### BACKGROUND

### 1. Technical Field

The present disclosure relates to an ink jet ink composition and a recording method.

### 2. Related Art

The ink jet recording method enables recording of high-definition images with a relatively simple apparatus, and is developing in various fields. For example, in label printing, an inkjet recording method capable of recording images not only on an ink absorbent recording medium (hereinafter, also referred to as "absorbent recording medium") such as high-quality paper, but also on a ink low-absorbent or non-absorbent recording medium (hereinafter, also referred to as "low- or non-absorbent recording medium") such as a film is being studied.

For example, JP-A-2021-133555 proposes an ink composition containing an organic solvent A that is a 1,2-alkanediol having a surface tension at 25°C of 30 mN/m or less and an organic solvent B that is a both-end alkanediol having a standard boiling point of 250°C or lower and having three or more carbon atoms, as an attempt to achieve both improvement in image quality on both the low- or non-absorbent recording medium and the absorbent recording medium and the securing of the ejection stability of the ink.

However, from the viewpoint of improving the inhibition of the clogging of ink jet nozzles, the filling and the fixability of an ink coating film, and the inhibition of curls of recorded matter, it has not been necessarily sufficient.

### SUMMARY

An aspect of an in ink jet ink composition according to the present disclosure is a water-based ink jet ink composition containing a moisturizer A having a solubility in water at 20°C of 850 g/L or more and a melting point of higher than 25°C, an organic solvent A that is a 1,2-alkanediol having a surface tension at 25°C of 34 mN/m or less, and an acetylene glycol-based surfactant, wherein a content of the organic solvent A is 4% by mass or more with respect to a total mass of the ink composition, and the ink composition does not contain a polyol organic solvent having a standard boiling point of higher than 280°C in an amount of more than 2.5% by mass with respect to the total mass of the ink composition.

An aspect of a recording method according to the present disclosure includes an ink attaching step of ejecting the above-describe ink jet ink composition from an ink jet head to attach the ink jet ink composition to a recording medium.

### BRIEF DESCRIPTION OF THE DRAWINGS

FIG. 1 is a perspective view of a serial printer that can be used in a recording method according to an embodiment.
FIG. 2 is a schematic side view of a line printer that can be used in the recording method according to the embodiment.

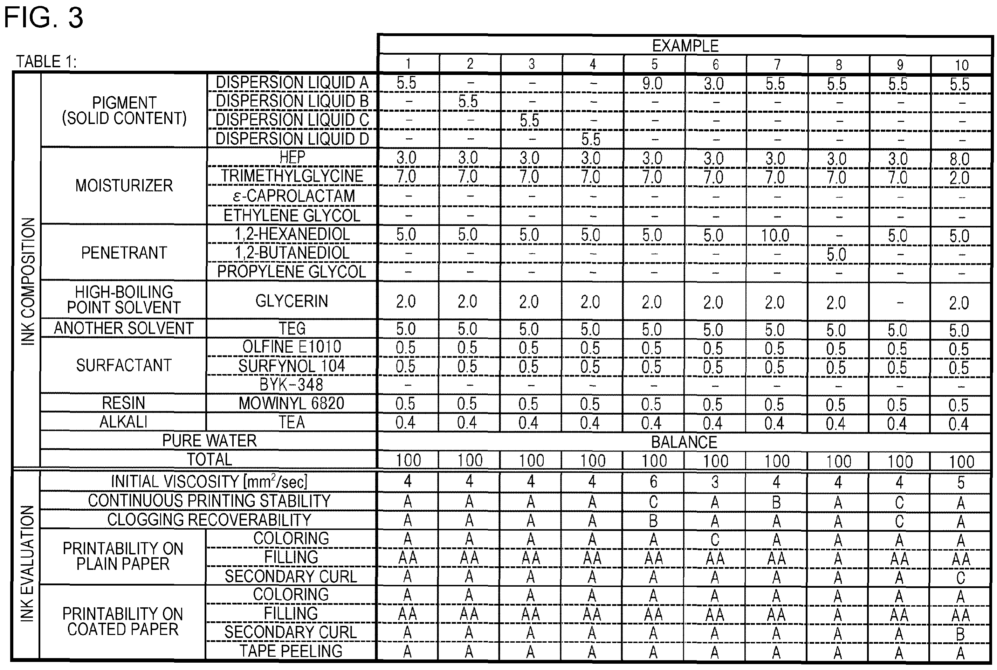

FIG. 3 is Table 1 showing the compositions and evaluation results of ink jet ink compositions of Examples.

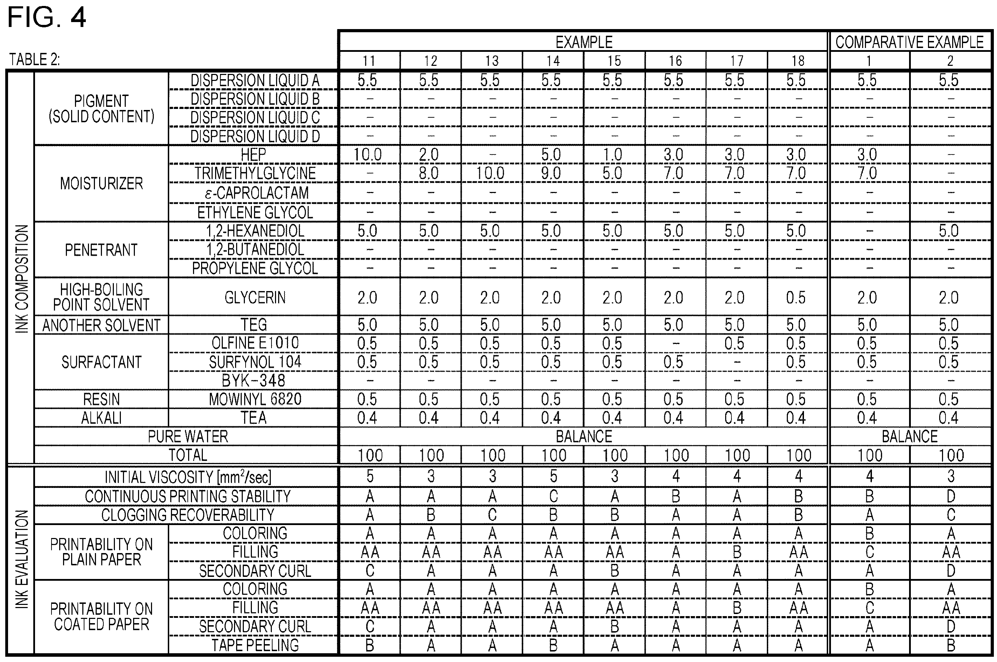

FIG. 4 is Table 2 showing the compositions and evaluation results of ink jet ink compositions of Examples and Comparative Examples.

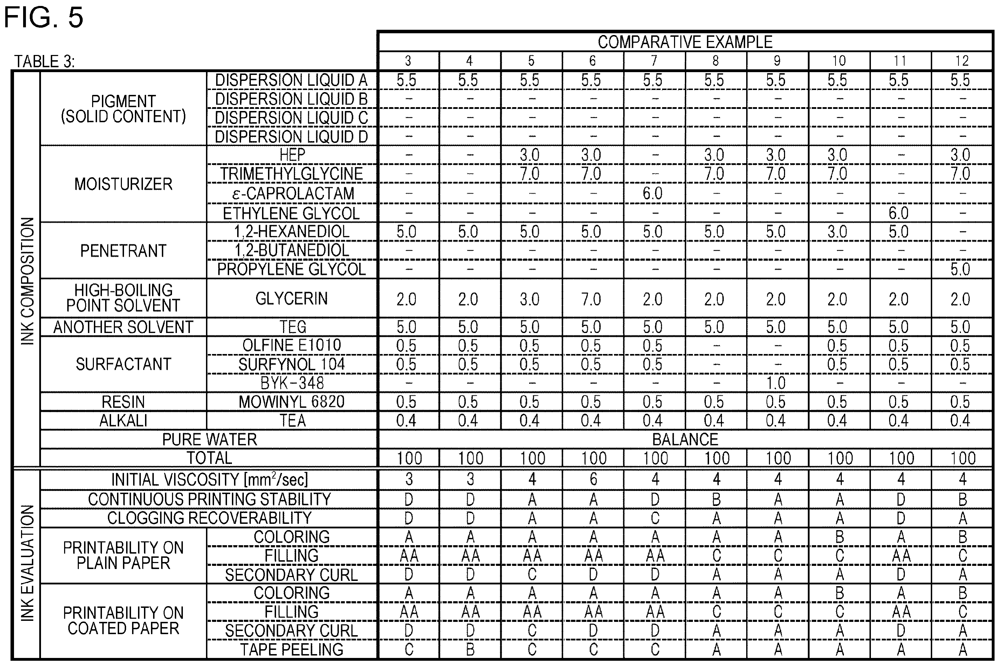

FIG. 5 is Table 3 showing the compositions and evaluation results of ink jet ink compositions of Comparative Examples.

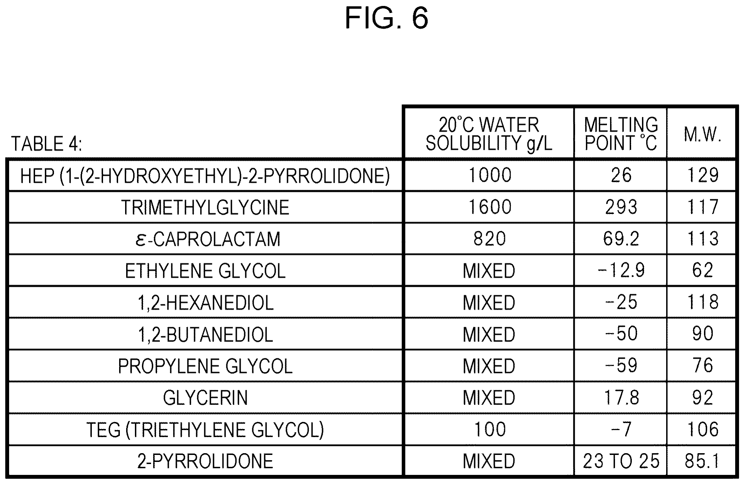

FIG. 6 is Table 4 showing the solubilities, melting points, and molecular weights of several moisturizers and solvents.
FIG. 7 is a schematic side view of another line printer that can be used in the recording method according to the embodiment.

### DESCRIPTION OF EMBODIMENTS

Hereinafter, embodiments of the present disclosure will be described. The embodiments described below describe examples of the present disclosure. The present disclosure is not limited to the following embodiments, and includes various modifications implemented within a range not changing a gist of the present disclosure. Not all of the configurations described below are configurations essential to the present disclosure.

In the present specification, a numerical value range represented using "to" means a range including numerical values shown before and after "to" as a lower limit value and an upper limit value.

In the present specification, "(meth)acrylic" means acrylic or methacrylic, and "(meth)acrylate" means acrylate or methacrylate.

### 1. Ink Jet Ink Composition

The ink jet ink composition according to the present embodiment is a water-based ink jet ink composition, and contains a moisturizer A having a solubility in water at 20°C of 850 g/L or more and a melting point of higher than 25°C, an organic solvent A that is a 1,2-alkanediol having a surface tension at 25°C of 34 mN/m or less, and an acetylene glycol-based surfactant. In addition, the content of the organic solvent A is 4% by mass or more with respect to the total mass of the ink jet ink composition, and the ink jet ink composition does not contain a polyol organic solvent having a standard boiling point of higher than 280°C in an amount of more than 2.5% by mass with respect to the total mass of the ink composition.

### 1.1. Water

The ink jet ink composition is a water-based composition containing water. In the present specification, "water-based" means that water is contained as one of the main solvent components. Water is contained as a main solvent component, and is a component evaporated and scattered by drying. Water is preferably pure water or ultrapure water from which ionic impurities have been removed as much as possible, such as ion exchanged water, ultrafiltered water, reverse osmosis water, or distilled water. Use of water sterilized by, for example, ultraviolet irradiation or addition of hydrogen peroxide is advantageous because it is possible to inhibit the occurrence of molds or bacteria when the water-based ink composition is stored for a long period of time. The content of water is not particularly limited, but is preferably 40.0% by mass or more, more preferably 50.0% by mass or more, more preferably 70.0% by mass or more, even more preferably 75.0% by mass or more, even more preferably 80.0% by mass or more and 98.0% by mass or less, and particularly preferably 85.0% by mass or more and 95.0% by mass or less with respect to the total mass of the ink jet ink composition.

### 1.2. Moisturizer A

The ink jet ink composition of the present embodiment contains a moisturizer A. The moisturizer A has a solubility in water at 20°C of 850 g/L or more and a melting point of higher than 25°C. Although there are a wide variety of compounds having moisture-retaining properties, in the present embodiment, among these compounds, a compound having a solubility in water at 20°C of 850 g/L or more and a melting point of higher than 25°C is referred to as "moisturizer A." The solubility is the mass (g) of the moisturizer A dissolved in 1 L of water. It can be measured by the method described in Examples described below.

The moisturizer A has a water solubility of 850 g/L or more, has high moisture-retaining properties, and contributes to the ejection stability of the ink jet ink composition from nozzles. At the same time, the moisturizer A has a relatively high melting point of higher than 25°C, tends to decrease in fluidity along with the drying of the ink, and thus contributes to the improvement of the ink drying properties. In addition, even if the moisturizer A remains in an ink coating film of recorded matter, the abrasion resistance (fixability) of an image is unlikely to be lowered. Further, although the moisturizer A is a moisturizer, the moisturizer A has a relatively high melting point of higher than 25°C, is close to a solid or a solidified state at room temperature, and can thus also contribute to the inhibition of curls of the recorded matter.

It is noted that the moisturizer A tends to remain in the recorded matter, but since the ink composition of the present embodiment has excellent drying properties, it is easy to sufficiently dry the solvent component of the ink, and even if the moisturizer A remains in the recorded matter, the drying properties and the abrasion resistance tend not to be affected.

The moisturizer A is not particularly limited so long as it has a solubility in water at 20°C of 850 g/L or more and a melting point of higher than 25°C. Organic compounds are preferable. Examples thereof include a lactam and a betaine. However, among these, those having a solubility in water at 20°C of 850 g/L or more and a melting point of higher than 25°C are used.

The lactam is a compound having a lactam ring. The lactam having a hydroxy group is preferable because one satisfying the above water solubility and melting point is easily obtained. The lactam ring is preferably a four- to six-membered ring. It preferably has an N-hydroxyalkyl structure, and more preferably has an N-hydroxyalkyl structure in which the alkyl is alkyl having 1 to 4 carbon atoms.

The betaine is a compound having a positive charge and a negative charge at non-adjacent positions in the same molecule, in which a hydrogen that can be dissociated is not bonded to an atom having the positive charge, and the compound constitutes an intramolecular salt and does not have a charge as a whole molecule. In particular, the betaine in which the positively charged moiety is a quaternary ammonium cation is preferable. The number of carbon atoms in the molecule of the betaine is preferably 4 to 20, 5 to 15, 6 to 12, or 7 to 11. Among these, trialkylglycine is preferable, and trialkylglycine in which each alkyl group is an alkyl group having three or less carbon atoms is more preferable. Trimethylglycine is more preferable.

Other examples of the moisturizer A include sugars and polyols having three or more hydroxy groups. However, among these, those having a solubility in water at 20°C of 850 g/L or more and a melting point of higher than 25°C are used. The polyols having three or more hydroxy groups, which are the moisturizer A, satisfy the above-described water solubility and melting point, and are not limited to polyols as organic solvents described below.

Examples of the moisturizer A include 1-(2-hydroxyethyl)-2-pyrrolidone (HE), trimethylglycine, and trimethylolpropane. A plurality of kinds of moisturizers A may be used.

The moisturizer A more preferably has a solubility in water at 20°C of 850 g/L or more and 2,000 g/L or less. Further, the solubility is preferably 900 to 1,700 g/L, and more preferably 1,000 to 1,600 g/L. When the solubility of the moisturizer A is within this range, the curl inhibition, the drying properties and/or the moisture-retaining properties can be further improved.

In addition, in view of more excellent drying properties, fixability, and the like, the solubility is more preferably 1,000 to 1,500 g/L. On the other hand, in view of more excellent clogging recoverability, curl inhibition, and the like, the solubility is more preferably 1,300 to 1,600 g/L.

The melting point of the moisturizer A is preferably 26°C or higher, more preferably 50 to 400°C, even more preferably 100 to 350°C, and particularly preferably 150 to 300°C. In this case, the drying properties, the fixability, the curl inhibition, and the like are more excellent, which is preferable. On the other hand, the melting point of the moisturizer A is preferably 250°C or lower, more preferably 200°C or lower, even more preferably 150°C or lower, and particularly preferably 100°C or lower. In this case, the clogging recoverability and the like are more excellent, which is preferable.

The molecular weight of the moisturizer A is not limited, but is preferably 50 to 200, and more preferably 100 to 150. In this case, the water solubility and the melting point are easily set to appropriate ranges, which is preferable.

The moisturizer A preferably includes one or more selected from the betaine and the lactam. In this way, the drying properties of the ink jet ink composition can be maintained more appropriately, and the filling of the image can be further improved. In particular, the lactam is preferable in view of more excellent clogging recoverability and the like. The betaine is preferable in view of more excellent curl inhibition, fixability, moisture-retaining properties, and the like. When the moisturizer A includes the betaine and the lactam, it is preferable in view of more excellent clogging recoverability, curl inhibition, fixability, moisture-retaining properties, and the like.

The content of the moisturizer A in the ink jet ink composition is not particularly limited, and, for example, is preferably 0.2% by mass or more and 20% by mass or less, more preferably 0.5% by mass or more and 15% by mass or less, even more preferably 1% by mass or more and 14% by mass or less, and particularly preferably 2% by mass or more and 13% by mass or less with respect to the total mass of the ink composition. Further, the content is preferably 3 to 12% by mass, more preferably 5 to 11% by mass, and even more preferably 6 to 10% by mass. When the content of the moisturizer A is within this range, the above effects such as the inhibition of the clogging of the nozzles due to the ink jet ink composition are more excellent, which is preferable.

### 1.3. Organic Solvent A

The ink jet ink composition according to the present embodiment contains an organic solvent A that is a 1,2-alkanediol having a surface tension at 25°C of 34 mN/m or less. In addition, in the ink jet ink composition according to the present embodiment, the content of the organic solvent A is 4% by mass or more with respect to the total mass of the ink composition.

The organic solvent A enhances the wetting and spreading properties of the ink on a recording medium, and thereby the filling of the ink to the recording medium is excellent, and thus it is possible to obtain image quality having a high OD value and excellent color developing properties. In addition, the surface tension of the ink decreases due to the organic solvent A, and the ink droplets at the time of being ejected from an ink jet head tend to be easily split and micronized, which also contributes to the improvement of the filling of the ink to the recording medium. The filling of the ink means that the recording medium is sufficiently covered with the ink, and the base of the recording medium is difficult to see. When the filling is good, the coloring is excellent.

When the recording medium is a low-absorbent recording medium or a non-absorbent recording medium, a water-based ink in particular does not easily wet and spread, and filling tends to be poor, and thus the effect of the organic solvent A is easily produced, which is useful. In addition, in the case of the low-absorbent recording medium or the non-absorbent recording medium, the ink is less likely to be absorbed into the recording medium, and image quality having a high OD value and excellent color developing properties can be obtained, which is preferable.

The surface tension of the organic solvent A at 25°C is 34 mN/m or less, preferably 32 mN/m or less or 30 mN/m or less, more preferably 28 mN/m or less, and particularly preferably 27 mN/m or less. The surface tension of the organic solvent A at 25°C is preferably 10 mN/m or more, more preferably 15 mN/m or more, and particularly preferably 20 mN/m or more. The 1,2-alkanediol having a surface tension at 25°C within the above ranges is useful as a penetrating solvent, and can increase the wetting and spreading properties of the ink on a low- or non-absorbent recording medium in particular. As a method for measuring the surface tension, a method of measuring the surface tension at a liquid temperature of 25°C by the Wilhelmy method using a surface tension meter (for example, a surface tension meter CBVP-Z manufactured by Kyowa Interface Science Co., Ltd.) commonly used can be exemplified.

Such an organic solvent A is preferably a 1,2-alkanediol having 4 or more carbon atoms, preferably a 1,2-alkanediol having 5 or more carbon atoms, more preferably a 1,2-alkanediol having 5 to 7 carbon atoms, and even more preferably a 1,2-alkanediol having 6 or 7 carbon atoms.

Specific examples of the organic solvent A include 1,2-butanediol, 1,2-pentanediol, 1,2-hexanediol, and 1,2-heptanediol, and either 1,2-pentanediol or 1,2-hexanediol is preferable, and 1,2-hexanediol is particularly preferable. A plurality of kinds of organic solvents A may be used.

The upper limit of the content of the organic solvent A is preferably 25% by mass or less, more preferably 20% by mass or less, and particularly preferably 15% by mass or less with respect to the total mass of the ink jet ink composition. Further, the content is preferably 10% by mass or less, and more preferably 7% by mass or less.

The lower limit of the content of the organic solvent A is preferably 5% by mass or more with respect to the total mass of the ink jet ink composition. When the content of the organic solvent A is within the above range, filling to the low- or non-absorbent recording medium can be sufficiently increased, and thus it is easy to obtain image quality having a high OD value and excellent color developing properties in the low- or non-absorbent recording medium. In addition, the drying properties of the ink coating film can be maintained more appropriately, and the filling of the image can be further improved.

### 1.4. Acetylene Glycol-Based Surfactant

The ink jet ink composition of the present embodiment contains an acetylene glycol-based surfactant. The acetylene glycol-based surfactant has a function of reducing the surface tension of the ink jet ink composition and improving wetting properties with the recording medium or a base. Therefore, the filling is excellent. In particular, in the low-absorbent recording medium or the non-absorbent recording medium, witting properties with respect to the recording medium are excellent, and the filling is excellent.

Among these, in the case of the low-absorbent recording medium that is coated paper, the acetylene glycol-based surfactant has particularly excellent wetting properties and has excellent filling. It is presumed that this is because such a recording medium has a layer called a coating layer, and the acetylene glycol-based surfactant has particularly excellent wetting properties and has excellent filling to the coating layer.

The acetylene glycol-based surfactant is not particularly limited, and examples thereof include SURFYNOL 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, and DF110D (all product names, manufactured by Air Products & Chemicals. Inc.), OLFINE B, Y, P, A, STG, SPC, E1004, E1010, PD-001, PD-002W, PD-003, PD-004, EXP. 4001, EXP. 4036, EXP. 4051, AF-103, AF-104, AK-02, SK-14, and AE-3 (all product names, manufactured by Nissin Chemical Industry Co., Ltd.), and ACETYLENOL E00, E00P, E40, and E100 (all product names, manufactured by Kawaken Fine Chemicals Co., Ltd.).

The ink jet ink composition may contain a plurality of kinds of acetylene glycol-based surfactants. The content of the acetylene glycol-based surfactant is preferably 0.1% by mass or more and 2.0% by mass or less, more preferably 0.2% by mass or more and 1.5% by mass or less, and particularly preferably 0.3% by mass or more and 1.0% by mass or less with respect to the total mass of the ink jet ink composition. Further, the content is preferably 0.5 to 0.8% by mass.

The HLB value of the acetylene glycol-based surfactant is not particularly limited. In the present specification, the "value of hydrophile and lipophile balance (HLB value)" is a numerical indicating a hydrophile and lipophile balance of the compound. Here, the HLB value is a value calculated by a Griffin method and can be determined by the following equation (H).$HLB value = 20 \times sum of formula weights of hydrophilic portions / molecular weight \left(H\right)$

For example, when an acetylene glycol-based surfactant having an HLB value of 5 or less is contained, the permeability of an absorbent recording medium such as plain paper can be further improved. In addition, when an acetylene glycol-based surfactant having an HLB value of 5 or less is contained, the wetting and spreading on the low-absorbent recording medium such as coated paper in particular can be further improved. Furthermore, the ink jet ink is easily ejected with fine ink droplets, and tends to have excellent ejection stability. It is presumed that there is an effect that the lower the HLB value of the acetylene glycol-based surfactant is, the higher the hydrophobicity is, and the lower the surface tension of the ink is.

On the other hand, the lower the HLB value of the acetylene glycol-based surfactant is, the lower the solubility in water is, and in a condition in which the ink is dried, the phase separation of the acetylene glycol-based surfactant is likely to occur, poor ejection occurs, and the ejection reliability tends to decrease. Therefore, the content in the ink is preferably set to a predetermined value or less.

On the other hand, when the HLB value of the acetylene glycol-based surfactant is high, the above-described effect is obtained to some extent, and the insoluble matter of the acetylene glycol-based surfactant is unlikely to occur even in a condition in which the ink is dried, and the printing stability is excellent, which is preferable.

From this viewpoint, the ink jet ink composition according to the present embodiment preferably contains an acetylene glycol-based surfactant having an HLB value of 5 or less and an acetylene glycol-based surfactant having an HLB value of more than 5.

The lower limit of the HLB value of the surfactant is not particularly limited, but is preferably 0 or more, 1 or more, or 2 or more. Furthermore, the lower limit of the HLB value is preferably 6 or more, 10 or more, or 13 or more. When the lower limit of the HLB value is the above or more, the compatibility with the ink component is further improved, the phase separation is less likely to occur, and the ejection reliability tends to be further improved.

The upper limit of the HLB value of the surfactant is not particularly limited, but is preferably 15 or less, 12 or less, or 10 or less. Furthermore, the upper limit of the HLB value is preferably 8 or less or 6 or less. When the upper limit of the HLB value is the above or less, the permeability and the ejection stability tend to be further improved.

The content of the acetylene glycol-based surfactant having an HLB value of 5 or less is preferably 0.05 to 1% by mass, more preferably 0.1 to 0.7% by mass, even more preferably 0.2 to 0.6% by mass, and still even more preferably 0.3 to 0.5% by mass with respect to the total mass of the ink jet ink composition. When the content is within the above range, the permeability, the ejection stability, the ejection reliability, and the like tend to be more excellent. The content of the acetylene glycol-based surfactant having an HLB value of more than 5 may be within the above range.

The mass ratio between the content of the acetylene glycol-based surfactant having an HLB value of 5 or less and the content of the acetylene glycol-based surfactant having an HLB value of more than 5 may be 1:2 to 2:1, 1:1.5 to 1.5:1, or 1:1.3 to 1.3:1.

### 1.5. Polyol Organic Solvent having Standard Boiling Point of 280°C or Higher

The ink jet ink composition according to the present embodiment does not contain a polyol organic solvent having a standard boiling point of higher than 280°C in an amount of more than 2.5% by mass with respect to the total mass of the ink composition. The content is preferably 2% by mass or less, 1.5% by mass or less, 1% by mass or less, or 0.5% by mass or less.

It is noted that the ink jet ink composition may not contain the polyol organic solvent having a standard boiling point of higher than 280°C. The lower limit of the content is 0% by mass or more with respect to the total mass of the ink composition. Even if contained, it may not exceed 2.5% by mass with respect to the total mass of the ink composition.

Examples of the polyol organic solvent having a standard boiling point of higher than 280°C include glycerin, trimethylolethane, and trimethylolpropane.

The polyol organic solvent having a standard boiling point of higher than 280°C is advantageous in that the moisture-retaining properties are particularly high and the ink is hard to dry, but the content is set to 2.5% by mass or less because the ink drying properties may be excessively reduced. That is, the ink jet ink composition may contain a polyol organic solvent, and the content thereof may be 2.5% by mass or less with respect to the total mass of the ink composition. When the polyol organic solvent having a standard boiling point of higher than 280°C is contained, the moisture-retaining properties of the ink jet ink composition are excellent, and the ejection stability can be made more excellent.

The content of the polyol organic solvent having a standard boiling point of higher than 280°C is preferably 0.2 to 2.3% by mass, more preferably 0.5 to 2% by mass, and even more preferably 1.0 to 2% by mass with respect to the total mass of the ink composition.

### 1.6. Other Components

### 1.6.1. Binder Resin

The ink jet ink composition may further contain a binder resin. The binder resin has a function of fixing components such as a pigment to a recording medium. The binder resin may be resin particles or a water-soluble resin. The binder resin is different from a dispersant resin for dispersing the pigment. The binder resin may have a property of being dispersed in a water-based medium like an emulsion, or may be a water-soluble resin.

The binder resin may be formulated as a water-soluble resin or an emulsion of resin particles. Such a resin may function as what is called a fixing resin that improves the adhesion and the abrasion resistance of components of the ink attached to the recording medium.

Examples of the resin for the binder resin include resins including a urethane-based resin, an acrylic-based resin, a fluorene-based resin, a polyolefin-based resin, a rosin-modified resin, a terpene-based resin, a polyester-based resin, a polyamide-based resin, an epoxy-based resin, a vinyl chloride-based resin, an ethylene-vinyl acetate-based resin, a vinyl acetate resin, a butadiene resin, a styrene resin, a crosslinked acrylic resin, a crosslinked styrene resin, a benzoguanamine resin, a phenolic resin, a silicone resin, an epoxy resin, a paraffin resin, and a fluororesin. These resins are often handled in emulsion form, but may also be powder properties. The resin can be used alone or in combination of two or more thereof.

The urethane-based resin is a general term for a resin having a urethane bond. As the urethane-based resin, a polyether-type urethane resin including an ether bond in the main chain in addition to a urethane bond, a polyester-type urethane resin including an ester bond in the main chain in addition to a urethane bond, a polycarbonate-type urethane resin including a carbonate bond in the main chain in addition to a urethane bond, and the like may be used. As the urethane-based resin, commercially available products may be used, and it may be selected from, for example, Superflex 210, 460, 460s, 840, and E-4000 (product names, manufactured by DKS Co. Ltd.), Resamine D-1060, D-2020, D-4080, D-4200, D-6300, and D-6455 (product names, manufactured by Dainichiseika Colour & Chemicals Mfg. Co., Ltd.), Takelac WS-6020, WS-6021, and W-512-A-6 (product names, manufactured by Mitsui Chemical Polyurethanes, Inc.), Sancure 2710 (a product name, manufactured by Lubrizol Corporation), Permarin UA-150 (a product name, manufactured by Sanyo Chemical Industries, Ltd.), and the like.

The acrylic-based resin is a general term for polymers obtained by polymerizing at least an acrylic-based monomer such as (meth)acrylic acid and (meth)acrylate as one component, and examples thereof include a resin obtained from an acrylic-based monomer, and a copolymer of the acrylic-based monomer and a monomer other than the acrylic-based monomer. Examples thereof include an acrylic-vinyl-based resin, which is a copolymer of the acrylic-based monomer and a vinyl-based monomer. Further examples thereof include a copolymer with a vinyl-based monomer such as styrene. As the acrylic-based monomer, acrylamide, acrylonitrile, and the like can also be used.

As a resin emulsion made from the acrylic-based resin, commercially available products may be used, and it may be selected from, for example, FK-854 (a product name, manufactured by Chuo Rika Kogyo Corporation), Mowinyl 952B and 718A (product names, manufactured by The Nippon Synthetic Chemical Industry Co., Ltd.), Nipol LX852 and LX874 (product names, Zeon Corporation), Polysol AT860 (manufactured by Showa Denko K.K.), Voncoat AN-1190S, YG-651, AC-501, AN-1170, and 4001 (product names, manufactured by DIC Corporation, acrylic-based resin emulsion), and the like.

It is noted that the acrylic-based resin may be a styrene-acrylic-based resin as described above. In addition, in the present specification, the notation of "(meth)acrylic" means at least one of acrylic and methacrylic.

The styrene-acrylic-based resin is a copolymer obtained from a styrene monomer and an acrylic-based monomer, and examples thereof include a styrene-acrylic acid copolymer, a styrene-methacrylic acid copolymer, a styrene-methacrylic acid-acrylate copolymer, a styrene-α-methylstyrene-acrylic acid copolymer, and a styrene-α-methylstyrene-acrylic acid-acrylate copolymer. As the styrene-acrylic-based resin, commercially available products may be used, and examples thereof include Joncryl 62J, 7100, 390, 711, 511, 7001, 631, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (product names, manufactured by BASF) and Mowinyl 966A and 975N (product names, manufactured by The Nippon Synthetic Chemical Industry Co., Ltd.).

The vinyl chloride-based resin may be a vinyl chloride-vinyl acetate copolymer.

The polyolefin-based resin has an olefin such as ethylene, propylene, or butylene in the structural skeleton, and known resins can be appropriately selected and used. As the polyolefin resin, commercially available products can be used, and it may be selected from, for example, Arrowbase CB-1200 and CD-1200 (product names, manufactured by Unitika Ltd.), and the like.

Further, the resin may be supplied in the form of an emulsion, and examples of commercially available products of such a resin emulsion may be selected from Microgel E-1002 and E-5002 (product names, manufactured by Nippon Paint Co., Ltd., styrene-acrylic-based resin emulsion), Voncoat AN 1190S, YG-651, AC-501, AN-1170, 4001, and 5454 (product names, manufactured by DIC Corporation, styrene-acrylic-based resin emulsion), Polysol AM 710, AM-920, AM-2300, AP-4735, AT-860, and PSASE 4210E (acrylic-based resin emulsion), Polysol AP-7020 (styrene-acrylic resin emulsion), Polysol SH-502 (vinyl acetate resin emulsion), Polysol AD-13, AD-2, AD-10, AD-96, AD-17, and AD-70 (ethylene-vinyl acetate resin emulsion), Polysol PSASE-6010 (ethylene-vinyl acetate resin emulsion) (product names, manufactured by Showa Denko K.K.), Polysol SAE1014 (product name, styrene-acrylic-based resin emulsion, manufactured by Zeon Corporation), Saivinol SK-200 (product name, acrylic-based resin emulsion, manufactured by Saiden Chemical Industry Co., Ltd.), AE-120A (product name, manufactured by JSR Corporation, acrylic resin emulsion), AE373D (product name, manufactured by Emulsion Technology Co., Ltd., carboxy-modified styrene-acrylic resin emulsion), Seikadyne 1900W (product name, manufactured by Dainichiseika Color & Chemicals Mfg. Co., Ltd., ethylene-vinyl acetate resin emulsion), Vinyblan 2682 (acrylic resin emulsion), Vinyblan 2886 (vinyl acetate-acrylic resin emulsion), Vinyblan 5202 (acrylic acetate resin emulsion) (product names, manufactured by Nissin Chemical Co., Ltd.), Vinyblan 700 and 2586 (manufactured by Nissin Chemical Co., Ltd.), Elitel KA-50715, KT-8803, KT-9204, KT-8701, KT-8904, and KT-0507 (product names, manufactured by Unitika Ltd., polyester resin emulsion), Hitec SN 2002 (product name, manufactured by Toho Chemical Industry Co., Ltd., polyester resin emulsion), Takelac W-6020, W-635, W-6061, W-605, W-635, and W-6021 (product names, manufactured by Mitsui Chemicals Polyurethanes, Inc., urethane-based resin emulsion), Superflex 870, 800, 150, 420, 460, 470, 610, 620, and 700 (product names, manufactured by DKS Co. Ltd., urethane-based resin emulsion), Permarin UA-150 (manufactured by Sanyo Chemical Industries, Ltd., urethane-based resin emulsion), Sancure 2710 (manufactured by Lubrizol Japan Limited, urethane-based resin emulsion), NeoRez R-9660, R-9637, and R-940 (manufactured by Kusumoto Chemicals, Ltd., urethane-based resin emulsion), Adeka Bontiter HUX-380 and 290K (manufactured by ADEKA Corporation, urethane-based resin emulsion), Mowinyl 966A and Mowinyl 7320 (manufactured by The Nippon Synthetic Chemical Industry Co., Ltd.), Joncryl 7100, 390, 711, 511, 7001, 631, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (manufactured by BASF), NK Binder-R-5HN (manufactured by Shin-Nakamura Chemical Co., Ltd.), Hydran WLS-210 (non-crosslinked polyurethane: manufactured by DIC Corporation), Joncryl 7610 (manufactured by BASF), and the like.

Examples of the water-soluble resin include a resin in which no particle size peak is detected when the volume average particle size (D50) is measured with a dynamic light scattering particle size distribution analyzer after the resin is diluted 100-fold with water with respect to a solid content of 1 g of the resin. Examples of the dynamic light scattering particle size distribution analyzer include Nanotrac Wave II-EX150.

In the present specification, the water-soluble resin is different from a resin for pigment dispersion (a pigment dispersion resin) used for dispersing the pigment, and indicates a resin that is not attached to the pigment through adsorption or the like, but is dissolved in the ink. In the present specification, "water-soluble" refers to a property of being able to be dissolved in ion exchanged water at 20°C in an amount of 3% by mass or more; the is preferably dissolved in an amount of 5% by mass or more, more preferably dissolved in an amount of 10% by mass or more, and even more preferably dissolved in an amount of 25% by mass or more.

Being able to be dissolved means that after water and the resin are mixed and stirred, undissolved residue, cloudiness, or layer separation is not seen. In addition, the resin is not a resin dispersion (resin particles) in which the resin is dispersed in water, but the resin is dissolved in water.

Examples of the characteristics of the water-soluble resin include an anionic resin, a nonionic resin, and a cationic resin. In the ink jet ink composition of the present embodiment, an anionic resin is preferably used. The water-soluble resin preferably has an acidic group in the structure and has an acid value. The acidic group may be a salt. Examples of the acidic group include a carboxy group, a sulfonyl group, and a phosphoric acid group, and a carboxy group is more preferable.

Preferable examples of the kind of the water-soluble resin include an acrylic-based resin, a maleic acid-based resin, a urethane-based resin, and a polyester-based resin.

The acrylic-based resin is a resin polymerized using at least an acrylic-based monomer.

The maleic acid-based resin is a resin polymerized using at least maleic acid or a maleic acid derivative. More specific examples thereof include an acrylic-based resin, a styrene-acrylic-based resin, a styrene-maleic acid-based resin, an acrylonitrile-acrylic-based resin, a vinyl acetate-acrylic-based resin, a polyurethane-based resin, and a polyester-based resin. The water-soluble resin is preferably selected from the acrylic-based resin and the maleic acid-based resin.

Further, a maleic acid-based resin polymerized using at least maleic acid or a maleic acid derivative, such as a styrene-maleic acid-based resin, is more preferable. In other words, the maleic acid-based resin is a polymer compound having a structure derived from maleic acids.

It is noted that a resin polymerized using at least an acrylic-based monomer and maleic acid or a maleic acid derivative is included in the maleic acid-based resin.

Examples of the maleic acids include a compound having a structure in which one carboxy group is bonded to each of adjacent carbon atoms bonded through a carbon-carbon double bond of ethylene and a compound that is a derivative thereof.

Specific examples of the maleic acids include maleic acid, maleic anhydride, fumaric acid, citraconic acid, citraconic anhydride, and mesaconic acid. The maleic acids may be those in which the carboxy groups bonded to the respective adjacent carbon atoms are cyclodehydrated or esterified. A carboxy group forming a salt is also included in the carboxy group.

Examples of the derivative include those in which the carboxy group is derived as described above, and those in which the ethylene skeleton further has a substituent.

Among the maleic acids, it is preferable to use maleic acid or maleic acid with its carboxy group being derived.

The maleic acid-based resin may be those with the carboxy group derived from the maleic acids being cyclodehydrated or esterified. A carboxy group forming a salt is also included in the carboxy group.

The polymer compound having a structure derived from the maleic acids can be a polymer compound obtained by polymerization or copolymerization using at least the maleic acids.

The maleic acid-based resin may be a polymer of the maleic acids, or a copolymer of the maleic acids and another monomer. Examples of the other monomer in this case include vinyl monomers such as styrene, vinylnaphthalene, and vinyl acetate, and acrylic monomers such as (meth)acrylic acid and esters of (meth)acrylic acid.

Examples of commercially available products of the maleic acid-based resin include SN Dispersant 5027 and 5029 (manufactured by San Nopco Ltd.), Sansparl PS-8 (manufactured by Sanyo Chemical Industries, Ltd.), Malialim HKM-50A, 150A, AKM-0531, and SC-0505K, and Polyster OMA (manufactured by NOF Corporation), Demol P, EP, and ST, and Poiz 520 and 521 (manufactured by Kao Corporation), Polity A550 (manufactured by Lion Corporation), Arastar 703S, Polymaron 1318, 351T, 385, 372, 375CB, 482, 482S, and 1329 (manufactured by Arakawa Chemical Industries, Ltd.), Xiran 1440H, 2625H, 1000H, 2000H, and 3000H (manufactured by Polyscope), Isobam-104 (manufactured by Kuraray Co., Ltd.), and Flowlen G-700AMP and G-700DMEA (manufactured by Kyoeisha Chemical Co., Ltd.).

When the ink jet ink composition contains the binder resin, the content thereof is, as a solid content, preferably 0.05% by mass or more and 10% by mass or less, more preferably 0.1% by mass or more and 5.0% by mass or less, and even more preferably 0.1% by mass or more and 4.0% by mass or less with respect to the total mass of the ink jet ink composition. Further, the content is preferably 0.2 to 2% by mass, more preferably 0.3 to 1% by mass, and even more preferably 0.4 to 0.7% by mass.

### 1.6.2. Coloring Material

The ink jet ink composition according to the present embodiment may further contain a coloring material. When the ink jet ink composition contains the coloring material, the image can be formed by the ink coating film. As the coloring material, both pigments and dyes can be used, and inorganic pigments including carbon black and titanium white, organic pigments, oil-soluble dyes, acid dyes, direct dyes, reactive dyes, basic dyes, disperse dyes, sublimation dyes, and the like can be used.

As the inorganic pigments, carbon blacks (C.I. Pigment Black 7) such as furnace black, lamp black, acetylene black, and channel black, iron oxide, titanium oxide, zinc oxide, silica, and the like can be used.

Examples of the organic pigments include a quinacridone-based pigment, a quinacridone-quinone-based pigment, a dioxazine-based pigment, a phthalocyanine-based pigment, an anthrapyrimidine-based pigment, an anthanthrone-based pigment, an indanthrone-based pigment, a flavanthrone-based pigment, a perylene-based pigment, a diketopyrrolopyrrole-based pigment, a perinone-based pigment, a quinophthalone-based pigment, an anthraquinone-based pigment, a thioindigo-based pigment, a benzimidazolone-based pigment, an isoindolinone-based pigment, an azomethine-based pigment, and an azo-based pigment.

Specific examples of the organic pigment that can be used in the ink jet ink composition include the following.

Examples of a cyan pigment include C.I. Pigment Blue 1, 2, 3, 15:3, 15:4, 15:34, 16, 22, and 60; and C.I. Vat Blue 4 and 60, and preferable examples include one or a mixture of two or more selected from the group consisting of C.I. Pigment Blue 15:3, 15:4, and 60.

Examples of a magenta pigment include C.I. Pigment Red 5, 7, 12, 48 (Ca), 48 (Mn), 57 (Ca), 57:1, 112, 122, 123, 168, 184, and 202; and C.I. Pigment Violet 19, and preferable examples include one or a mixture or a solid solution of two or more selected from the group consisting of C.I. Pigment Red 122, 202, and 209 and C.I. Pigment Violet 19.

Examples of a yellow pigment include C.I. Pigment Yellow 1, 2, 3, 12, 13, 14C, 16, 17, 73, 74, 75, 83, 93, 95, 97, 98, 119, 110, 114, 128, 129, 138, 150, 151, 154, 155, 180, and 185, and preferable examples include one or a mixture of two or more selected from the group consisting of C.I. Pigment Yellow 74, 109, 110, 128, and 138.

Pigments of other colors can also be used. Examples of such pigments include an orange pigment and a green pigment.

The pigments exemplified above are examples of suitable pigments, and the present disclosure is not limited thereby. These pigments may be used alone or as a mixture of two or more thereof, or may be used in combination with a dye.

The pigment may be dispersed using a dispersant resin, or may be dispersed as a self-dispersible pigment after oxidizing or sulfonating the surface of the pigment with ozone, hypochlorous acid, fuming sulfuric acid, or the like.

Examples of the dye that can be used in the ink jet ink composition include water-soluble dyes such as acid dyes, direct dyes, reactive dyes, and basic dyes, and water-dispersible dyes such as disperse dyes, oil-soluble dyes, and sublimation dyes.

The dyes exemplified above are examples of suitable coloring materials, and the present disclosure is not limited thereby. These dyes may be used alone or as a mixture of two or more thereof, or may be used in combination with a pigment.

In the ink jet ink composition of the present embodiment, the coloring material is more preferably selected from a resin-dispersed pigment, a self-dispersible pigment, and a dye.

The content of the coloring material is not particularly limited, and is preferably 0.1% by mass or more and 20% by mass or less, more preferably 0.2% by mass or more and 15% by mass or less, and even more preferably 1% by mass or more and 10% by mass or less. Furthermore, the content is preferably 3 to 9% by mass, more preferably 4 to 8% by mass, and even more preferably 5 to 7% by mass.

### 1.6.3. Surfactant

The ink jet ink composition may contain a surfactant other than the above-described acetylene glycol-based surfactant. Such a surfactant is not particularly limited, and examples thereof include a fluorine-based surfactant and a silicone-based surfactant.

As the fluorine-based surfactant, a fluorine-modified polymer is preferably used, and specific examples thereof include BYK-340 (product name, manufactured by BYK Japan KK).

The silicone-based surfactant is not particularly limited, and examples thereof preferably include a polysiloxane-based compound. The polysiloxane-based compound is not particularly limited, and examples thereof include a polyether-modified organosiloxane. Examples of commercially available products of the polyether-modified organosiloxane include BYK-306, BYK-307, BYK-333, BYK-341, BYK-345, BYK-346, and BYK-348 (product names, manufactured by BYK Japan KK), KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (product names, manufactured by Shin-Etsu Chemical Co., Ltd.), and Silface SAG503A and Silface SAG014 (product names, manufactured by Nissin Chemical Industry Co., Ltd.).

The surfactant may be used alone or in combination of two or more kinds thereof.

When the surfactant is contained, the content thereof is preferably set to 0.1% by mass to 1.0% by mass with respect to the total mass of the ink jet ink composition.

Since it is difficult to expect (filling by) wetting and spreading by these surfactants for a low- or non-absorbent recording medium such as coated paper, compared to the acetylene glycol-based surfactant, it is preferable to use these surfactants in an auxiliary manner for the acetylene glycol-based surfactant. The same applies to a case of being used for an absorbent recording medium such as plain paper.

### 1.6.4. Organic Solvent

The ink jet ink composition may contain an organic solvent other than the organic solvent A. Water-soluble organic solvents are preferable. Examples of such an organic solvent include esters, alkylene glycol ethers, cyclic esters, nitrogen-containing solvents, alcohols, and polyols. Examples of the nitrogen-containing solvents include acyclic amides. Examples of the acyclic amides include alkoxyalkylamides. Polyols are preferable.

Examples of the esters include glycol monoacetates such as ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, propylene glycol monomethyl ether acetate, dipropylene glycol monomethyl ether acetate, and methoxybutyl acetate; and glycol diesters such as ethylene glycol diacetate, diethylene glycol diacetate, propylene glycol diacetate, dipropylene glycol diacetate, ethylene glycol acetate propionate, ethylene glycol acetate butyrate, diethylene glycol acetate butyrate, diethylene glycol acetate propionate, diethylene glycol acetate butyrate, propylene glycol acetate propionate, propylene glycol acetate butyrate, dipropylene glycol acetate butyrate, and dipropylene glycol acetate propionate.

The alkylene glycol ethers may be monoethers or diethers of alkylene glycols, and are preferably alkyl ethers. Specific examples include alkylene glycol monoalkyl ethers such as ethylene glycol monomethyl ether, ethylene glycol monoethyl ether, ethylene glycol monoisopropyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, triethylene glycol monobutyl ether, tetraethylene glycol monomethyl ether, tetraethylene glycol monoethyl ether, tetraethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, and tripropylene glycol monobutyl ether; and alkylene glycol dialkyl ethers such as ethylene glycol dimethyl ether, ethylene glycol diethyl ether, ethylene glycol dibutyl ether, diethylene glycol dimethyl ether, diethylene glycol diethyl ether, diethylene glycol dibutyl ether, diethylene glycol methyl ethyl ether, diethylene glycol methyl butyl ether, triethylene glycol dimethyl ether, triethylene glycol diethyl ether, triethylene glycol dibutyl ether, triethylene glycol methyl butyl ether, tetraethylene glycol dimethyl ether, tetraethylene glycol diethyl ether, tetraethylene glycol dibutyl ether, propylene glycol dimethyl ether, propylene glycol diethyl ether, dipropylene glycol dimethyl ether, dipropylene glycol diethyl ether, and tripropylene glycol dimethyl ether.

Among the alkylene glycol ethers, diethers tend to be more likely to dissolve or swell the resin in the ink composition than monoethers, and are preferable in that the abrasion resistance can be further improved.

Examples of the cyclic esters include cyclic esters (lactones) such as β-propiolactone, γ-butyrolactone, δ-valerolactone, ε-caprolactone, β-butyrolactone, β-valerolactone, γ-valerolactone, β-hexanolactone, γ-hexanolactone, δ-hexanolactone, β-heptanolactone, γ-heptanolactone, δ-heptanolactone, ε-heptanolactone, γ-octanolactone, δ-octanolactone, ε-octanolactone, δ-nonalactone, ε-nonalactone, and ε-decanolactone; and compounds in which a hydrogen of a methylene group adjacent to a carbonyl group thereof is substituted with an alkyl group having 1 to 4 carbon atoms.

Examples of the alkoxyalkylamides include 3-methoxy-N,N-dimethylpropionamide, 3-methoxy-N,N-diethylpropionamide, 3-methoxy-N,N-methylethylpropionamide, 3-ethoxy-N,N-dimethylpropionamide, 3-ethoxy-N,N-diethylpropionamide, 3-ethoxy-N,N-methylethylpropionamide, 3-n-butoxy-N,N-dimethylpropionamide, 3-n-butoxy-N,N-diethylpropionamide, 3-n-butoxy-N,N-methylethylpropionamide, 3-n-propoxy-N,N-dimethylpropionamide, 3-n-propoxy-N,N-diethylpropionamide, 3-n-propoxy-N,N-methylethylpropionamide, 3-iso-propoxy-N,N-dimethylpropionamide, 3-iso-propoxy-N,N-diethylpropionamide, 3-iso-propoxy-N,N-methylethylpropionamide, 3-tert-butoxy-N,N-dimethylpropionamide, 3-tert-butoxy-N,N-diethylpropionamide, and 3-tert-butoxy-N,N-methylethylpropionamide.

Examples of the alcohols include compounds in which one hydrogen atom of an alkane is substituted with a hydroxy group. The alkane has preferably 10 or less carbon atoms, more preferably 6 or less carbon atoms, and even more preferably 3 or less carbon atoms. The number of carbon atoms of the alkane is 1 or more, and is preferably 2 or more. The alkane may be of a linear type or a branched type. Examples of the alcohol include methanol, ethanol, n-propyl alcohol, iso-propyl alcohol, n-butanol, 2-butanol, tert-butanol, iso-butanol, n-pentanol, 2-pentanol, 3-pentanol, tert-pentanol, phenoxyethanol, benzyl alcohol, and phenoxypropanol.

The polyols have two or more hydroxy groups in the molecule. The polyols are also referred to as polyhydric alcohols. Examples of the polyols include alkanediols and the other polyols. Among the polyols, the polyols having a standard boiling point of higher than 280°C are the above-described polyol organic solvent having a standard boiling point of higher than 280°C. Therefore, the polyols having a standard boiling point of 280°C or lower are polyols other than the polyol organic solvent having a standard boiling point of higher than 280°C.

Examples of the alkanediols include compounds in which an alkane is substituted with two hydroxy groups. Among the alkanediols, 1,2-alkanediols having a surface tension at 25°C of 34 mN/m or less are the above-mentioned organic solvent A. Therefore, among the alkanediols, those other than the 1,2-alkanediols having a surface tension 25°C of 34 mN/m or less are alkanediols other than the organic solvent A. Examples of the alkanediols other than the organic solvent A include alkanediols that are not 1,2-alkanediols and 1,2-alkanediols other than the organic solvent A.

Examples of the alkanediols include 1,3-propanediol, 1,3-butylene glycol (also known as 1,3-butanediol), 1,4-butanediol, 2,3-butanediol, 1,5-pentanediol, 2,4-pentanediol, 2-methyl-1,3-propanediol, 3-methyl-1,3-butanediol, 3-methyl-1,5-pentanediol, 2-ethyl-1,3-hexanediol, 2-methyl-1,3-pentanediol, 3-methyl-1,5-pentanediol, 2-methylpentane-2,4-diol, 1,6-hexanediol, 2-ethyl-2-methyl-1,3-propanediol, and 2-methyl-2-propyl-1,3-propanediol.

Examples of the polyols other than the alkanediols include a condensate in which two or more molecules of the alkanediols are intermolecularly condensed between hydroxy groups, and a compound having three or more hydroxy groups. The condensate in which two or more molecules of the alkanediols are intermolecularly condensed between hydroxy groups is also referred to as glycols.

Examples of the condensate in which two or more molecules of alkanediols are intermolecularly condensed between hydroxy groups include dialkylene glycols such as diethylene glycol and dipropylene glycol, trialkylene glycols such as triethylene glycol and tripropylene glycol.

The compound having three or more hydroxy groups is a compound having three or more hydroxy groups having an alkane or polyether structure as a skeleton. Examples of the compound having three or more hydroxy groups include glycerin, trimethylolethane, trimethylolpropane, 1,2,5-hexanetriol, 1,2,6-hexanetriol, pentaerythritol, and polyoxypropylenetriol.

One kind of the organic solvent may be used alone, or two or more kinds thereof may be used in combination.

When the ink jet ink composition contains an organic solvent other than the organic solvent A, the content thereof is preferably 30% by mass or less, preferably 20% by mass or less, preferably 10% by mass or less, and more preferably 5% by mass or less with respect to the total mass. On the other hand, the content is preferably 1% by mass or more, more preferably 3% by mass or more, and even more preferably 5% by mass or more.

### 1.6.5. Others

The ink jet ink composition may contain various additives such as a chelating agent, a rust inhibitor, an antifungal agent, an antioxidant, an anti-reducing agent, and an evaporation accelerator as needed.

### 1.7. Production, Physical Properties, etc.

The ink jet ink composition is obtained by mixing the above-described components in any order and, as needed, removing impurities by filtration or the like. As a method of mixing each component, a method of sequentially adding materials to a container equipped with a stirring device such as a mechanical stirrer and a magnetic stirrer, and performing stirring and mixing is suitably used. As a filtration method, centrifugal filtration, filter filtration, or the like can be performed, depending on the necessity.

In the ink jet ink composition, the surface tension (the static surface tension) at 20°C is preferably 18 mN/m or more and 40 mN/m or less, more preferably 20 mN/m or more and 35 mN/m or less, and even more preferably 22 mN/m or more and 33 mN/m or less from the viewpoint of further improving the image quality of the ink jet ink. The surface tension can be measured, for example, by confirming the surface tension when a platinum plate is wetted with the ink under an environment of 20°C using an automatic surface tensiometer CBVP-Z (product name, manufactured by Kyowa Interface Science Co., Ltd.).

From the same viewpoint, the viscosity at 20°C of the ink jet ink composition is preferably 3 mPa·s or more and 10 mPa·s or less, and more preferably 3 mPa·s or more and 8 mPa·s or less. For the measurement of the viscosity, for example, the viscosity under an environment of 20°C can be measured using a viscoelasticity tester MCR-300 (product name, manufactured by Physica).

### 1.8. Uses, etc.

The ink jet ink composition according to the present embodiment can be applied to various recording media. The recording medium may or may not have a recording surface that absorbs ink. Therefore, the recording medium is not particularly limited, and examples thereof include a liquid absorbent recording medium (an absorbent recording medium) such as paper such as plain paper or ink jet paper or cloth, a liquid low-absorbent recording medium (a low-absorbent recording medium) such as printing paper or art paper, and a liquid non-absorbent recording medium (a non-absorbent recording medium) such as metal, glass, or polymer. Even for such a recording medium in which the graininess of the image is more likely to occur, the recording method of the present embodiment can inhibit the filling of the image.

The liquid low-absorbent or liquid non-absorbent recording medium refers to a recording medium having a property of not absorbing ink at all or hardly absorbing ink. Quantitatively, the liquid non-absorbent or liquid low-absorbent recording medium refers to a "recording medium having a water absorption amount of 10 mL/m² or less from the start of contact to 30 msec^{1/2} in the Bristow method." The Bristow method is the most widely used method for measuring the amount of liquid absorbed in a short period of time and has been adopted by Japan Technical Association of the Pulp and Paper Industry (JAPAN TAPPI). Details of a test method are described in "Paper and Paperboard-Liquid-Absorptivity Test Method-Bristow Method" of Standard No. 51 of "JAPAN TAPPI Paper and Pulp Test Method 2000 Edition." On the other hand, the liquid absorbent recording medium refers to a recording medium that does not correspond to the liquid non-absorbent or liquid low-absorbent recording medium. In the present specification, liquid low-absorbent and liquid non-absorbent may be simply referred to as low-absorbent and non-absorbent, respectively.

Examples of the liquid non-absorbent recording medium include a medium in which plastic is coated on a base material such as paper, a medium in which a plastic film adheres to the base material such as paper, and a plastic film without an absorbing layer (receiving layer). Examples of the plastic include polyvinyl chloride, polyethylene terephthalate, polycarbonate, polystyrene, polyurethane, polyethylene, and polypropylene.

Examples of the liquid low-absorbent recording medium include a recording medium having a liquid low-absorbent coating layer provided on a surface thereof. For example, it is referred to as coated paper. Examples of the recording medium whose base material is paper include printing paper such as art paper, coated paper, and matte paper. When the base material is a plastic film, examples thereof include recording media in which a plastic base material such as polyvinyl chloride, polyethylene terephthalate, polycarbonate, polystyrene, polyurethane, polyethylene, or polypropylene is provided with a liquid low-absorbent coating layer.

The liquid low-absorbent coating layer provided on these base materials is provided, for example, by applying and drying a coating liquid containing particles made of an inorganic material. Examples of the inorganic material include particles made of a metal or the like or a compound of a metal or the like. Examples of the metal or the like include metals and semimetals. The compound of a metal or the like is, for example, an oxide of a metal or the like. Examples thereof include calcium compounds such as calcium carbonate and silicon compounds such as silicon oxide.

The coating layer may contain a binder or the like. The coating layer is a liquid low-absorbent coating layer, and is a non-void type layer.

In the low-absorbent recording medium having paper as a base material, curls tend to occur because it absorbs a small amount of ink.

The ink of the present embodiment contains the moisturizer A described above. Since the moisturizer A has a high melting point, it tends to remain in the recorded matter after recording. In recording to the non-absorbent recording medium, the ink is not absorbed at all, and if the moisturizer A remains in the recorded matter, the drying properties and the fixability after the drying of the ink tend to decrease. On the other hand, the low-absorbent recording medium such as coated paper slightly absorbs the ink, and the moisturizer A penetrates into the recording medium. Therefore, the drying properties and the fixability tend to be less likely to be affected. For this reason, when recording is performed on the low-absorbent recording medium, the ink of the present embodiment has particularly excellent drying properties and fixability, also produces an effect of curl inhibition, and is thus particularly useful.

In addition, in view of the affinity of the acetylene glycol-based surfactant is high and the wetting and spreading properties of the ink are particularly excellent for the coating layer, the ink of the present embodiment is particularly useful when recording is performed on the low-absorbent recording medium.

As the recording medium, a liquid absorbent recording medium can also be used. The liquid absorbent recording medium refers to a "recording medium having a water absorption amount of more than 10 mL/m² from the start of contact to 30 msec^{1/2} in the Bristow method."

Examples of the liquid absorbent recording medium include a recording medium in which a receiving layer that absorbs a liquid is provided on a surface of the recording medium to make it a liquid absorbent recording medium. Examples thereof include ink jet paper (paper dedicated to ink jet printing). Examples of the receiving layer that absorbs a liquid include a layer composed of a liquid absorbent resin, liquid absorbent inorganic fine particles, or the like.

Examples of the liquid absorbent recording medium also include a recording medium in which the base material itself of the recording medium is liquid absorbent. Examples thereof include fabric made of fibers and paper containing pulp as a component. Examples of the paper include plain paper, thick paper, and liner paper. Examples of the liner paper include paper formed of kraft pulp or paper such as used paper.

In addition, the recording medium may be a single sheet medium of A4 size or the like, or may be a long medium that is wound around a roll or the like. Furthermore, when the recording medium is long, the recording medium may be cut into single sheets. Such a recording medium may be referred to as cut paper in the present specification. Cutting to the cut paper is performed, for example, by a cutting unit in a recording apparatus or a cutting step performed after recording.

The ink jet ink composition of the present embodiment is preferably used for recording on the low-absorbent recording medium having paper as a base material from the viewpoint of obtaining a more remarkable effect. The ink jet ink composition can improve the filling and the fixability of the ink coating film even for the low-absorbent recording medium having paper as a base material, and can also sufficiently inhibit curls of the recorded matter.

The ink of the present embodiment is used for recording on the low-absorbent recording medium, may be further used for recording on the non-absorbent recording medium or the absorbent recording medium, and may be particularly used for recording on the absorbent recording medium. In this case, an effect of inhibiting curls of the absorbent recording medium is obtained, which is preferable.

The low-absorbent recording medium having paper as a base material is preferably cut paper in view of obtaining a more remarkable effect. The cut paper is stacked on a tray or the like after being cut. At this time, curls are easily generated in the cut recording medium, but the ink jet ink composition of the present embodiment can sufficiently inhibit curls of the recorded matter even for such a recording medium in which curls are easily generated.

### 1.9. Effects, etc.

The ink jet ink composition according to the present embodiment, by adopting the above configuration, can inhibit the clogging of the ink jet nozzles, improve the filling and the fixability of the ink coating film in the obtained recorded matter, and also inhibit curls of the recorded matter.

In addition, when the ink jet ink composition contains the organic solvent A in an amount of 4% by mass or more, the ink droplets ejected from the nozzles tend to be easily split, and it is presumed that the coverage area increases due to the ink droplets landing in a split manner. As a result, in the case of being attached to coated paper or the like, the filling of the ink coating film can be improved. In addition, the organic solvent A is an organic solvent that does not deteriorate the drying properties very much compared to other organic solvents, and can improve the ink drying properties compared to other organic solvents.

In addition, when the ink jet ink composition contains the acetylene glycol-based surfactant, the wetting and spreading properties of the ink can be improved, and the filling can be made excellent in the case of being attached to coated paper or the like in particular.

Furthermore, when the ink jet ink composition does not contain the polyol organic solvent having a standard boiling point of higher than 280°C in an amount of more than 2.5% by mass with respect to the total mass of the ink composition, more excellent moisture-retaining properties and ejection stability can be obtained. The polyol organic solvent having a standard boiling point of higher than 280°C advantageously has particularly high moisture-retaining properties, but may excessively reduce the ink drying properties, and is thus not contained in an amount of more than 2.5% by mass.

The ink jet ink composition according to the present embodiment can exhibit the effects obtained by these respective components in an additive or synergistic manner.

### 2. Recording Method

The recording method according to the present embodiment includes an ink attaching step of ejecting the above-described ink jet ink composition from an ink jet head to attach the ink jet ink composition to a recording medium.

### 2.1. Ink Attaching Step

The ink attaching step may be performed by any method so long as it is performed in an attaching step of ejecting the ink from the ink jet head to attach the ink to the recording medium, and the ink is attached while performing scanning, which is the movement of a relative position between the ink jet head and the recording medium. Examples of the ink jet type include a serial type and a line type. This can efficiently perform small-volume, multi-type printing with a small apparatus.

The attachment amount of the ink in the ink attaching step is preferably 0.4 mg/inch² or more. Furthermore, the amount is preferably 0.5 mg/inch² or more, preferably 1.0 mg/inch² or more, more preferably 1.5 mg/inch² or more, and even more preferably 2.0 mg/inch² or more. This can obtain an image having even better filling properties.

The attachment amount of the ink in the ink attaching step is preferably 15.0 mg/inch² or less, more preferably 10.0 mg/inch² or less, or 8.0 mg/inch² or less. In this case, effects such as the drying properties and the curl inhibition are easily produced, which is preferable. In addition, the maximum attachment amount of the ink in the ink attaching step may be within the above range, which is preferable.

In addition, the mass (ng) of ink droplets in the ink attaching step is preferably 0.5 ng or more and 10 ng or less, more preferably 1 ng or more and 8 ng or less, even more preferably 2 ng or more and 7 ng or less, and still even more preferably 3 ng or more and 6.5 ng or less.

The ink attaching step is performed by scanning in which the attachment of the ink jet ink composition is performed while moving the relative position between the recording medium and the ink jet head, and the ink jet head may be a line head in which the length of the ink jet head in a direction intersecting the movement direction is equal to or greater than the length of a recording area of the recording medium in the direction intersecting the movement direction. In this case, curls are more likely to occur, and high-speed, continuous printing is possible, and thus when the recording medium is stacked on a paper output tray, if curls occur, the recording medium tends not to be able to be neatly stacked, but curls of the recorded matter can be sufficiently inhibited by the recording method of the present embodiment.

The recording medium may be cut paper. In addition, the recording method may include a step of cutting the cut paper. Furthermore, the recording method may include a stacking step of discharging a plurality of recording media that have been subjected to the ink attaching step and cut to the paper output tray and stacking them thereon. When the cut paper is cut, there arises a situation in which curls are more likely to occur, but the recording method of the present embodiment can sufficiently inhibit curls of the recorded matter.

### 2.2. Other Steps

The recording method of the present embodiment may include a drying step. The drying step is a step of drying the ink composition attached to the recording medium by heating or the like. In particular, the drying step by heating is referred to as a heating step.

Examples of the drying step include drying performed simultaneously with the ink attaching step or immediately after the ink attaching step (drying performed near a platen, a primary drying step) and a step of drying the recording medium downstream of the platen after the ink attaching step (a post-drying step), and the drying step may be either of them or a combination thereof. Further, for example, the primary drying step may be performed, and the post-drying step may not be performed. In this case, the primary drying may be intended for final drying.

The drying step may include drying by heating (a heating step). Examples of the heating step include a primary heating step, which is the primary drying step, and a post-heating step, which is the post-drying step.

Since the ink of the present embodiment has excellent drying properties, the ink is easily dried by heating in the heating step, and recorded matter having excellent fixability can be recorded, which is preferable.

In addition, when the recording method includes the heating step, there may arise a situation in which curls are more likely to occur, but the recording method of the present embodiment can sufficiently inhibit curls of the recorded matter.

### Primary Drying Step

The recording method of the present embodiment may include a drying step of drying the ink jet ink composition attached to the recording medium. Due to the drying step, the drying of the ink jet ink composition proceeds, and the abrasion resistance and the like of the obtained recorded matter can be further improved.

The primary drying step is a step of heating the recording medium before the ink attaching step, or performing heating or blowing on the recording medium during the ink attaching step or at an early stage after the ink jet ink composition is attached to the recording medium to dry the ink at an early stage. In the case of involving heating, the drying step is the heating step.

The primary drying step is a step of drying at least part of a solvent component in the ink to an extent that the ink attached to the recording medium is at least reduced in the flow of the ink. The primary drying step may be performed such that the ink is attached to the heated recording medium, or may be performed at an early stage after the attachment to promote drying.

In the drying step, it is preferable that ink droplets that have landed on the recording medium be started to be dried within 0.5 second at the latest from the landing of the ink droplets. The drying unit (drying mechanism) for drying the ink on the recording medium is not particularly limited, and examples thereof include a platen heater, a hot air heater, and an IR heater, which include a heating function, and a blower, which does not include a heating function.

Examples of the type of the drying mechanism include a conduction type that conducts heat from a member in contact with the recording medium to the recording medium to heat the recording medium, a radiation type that radiates radiation such as IR to the recording medium to heat the recording medium, and a blowing type that blows air toward the recording medium. Two or more types of drying mechanisms may be used in combination. In particular, the blowing type and the other types may be used in combination.

Examples of the blowing type include a method of heating the recording medium while blowing air with warm air, and a method of promoting drying of the ink with air at room temperature without heating. The method without heating can inhibit the ink in the nozzles of the ink jet head from drying and ejection stability from decreasing, which is preferable. It is also preferable to use either the conduction type or the radiation type, and the blowing type in combination. When used in combination, the blowing type may be a method without heating, which is preferable. When the drying step is performed by blowing air without heating, the effect of inhibiting the unevenness of the image formed by the ink jet ink composition is more remarkable.

The surface temperature of the recording medium in the ink attaching step is preferably 60°C or lower, and more preferably 55°C or lower. Furthermore, the temperature is more preferably 30°C to 50°C, and even more preferably 30°C to 45°C. On the other hand, the temperature is more preferably 40°C or lower, even preferably 35°C or lower, particularly preferably 30°C or lower, and still even more preferably 25°C to 28°C.

When the surface temperature of the recording medium is within the above range, there is a tendency that the drying properties are further improved, and the abrasion resistance of the obtained recorded matter is further improved. In addition, the clogging recoverability, the ejection stability, and the color developing properties are also more excellent, which is preferable.

When the primary drying step by heating is performed, the temperature is a temperature by heating in the primary drying step, and when the primary drying step by heating is not performed, the temperature is a temperature not by heating in the heating step.

When the recording medium is the low-absorbent recording medium, since the recording medium absorbs a small amount of ink, it is possible not to perform the primary drying step or not to perform at least the primary heating step. In this case, the clogging recoverability and the ejection stability are excellent, which is preferable.

When the blowing type is used, the wind speed in the vicinity of the recording medium is preferably 0.5 to 10 m/s, more preferably 1 to 5 m/s, and even more preferably 2 to 3 m/s. The wind temperature is preferably 45°C or lower, more preferably 40°C or lower, even more preferably 32°C or lower, and particularly preferably 20 to 27°C. In this way, the unevenness of the image formed by the ink jet ink composition can be further inhibited.

The drying step may include a blowing step of blowing air to the ink jet ink composition attached to the recording medium.

The recording method according to the present embodiment may include a post-drying step of heating the recording medium after the ink attaching step. The post-drying step is preferably drying by heating, and drying by heating is also referred to as a post-heating step.

The post-heating step can be performed, for example, using an appropriate heating unit. The post-heating step is performed by, for example, an after-heater (to which a heating heater 5 corresponds in an example of an ink jet recording apparatus described below). In addition, the heating unit is not limited to the heating unit provided in the ink jet recording apparatus, and another drying unit may be used. As a result, the obtained image can be dried and more sufficiently fixed, and thus, for example, the recorded matter can be brought in a state of being usable at an early stage.

The temperature of the recording medium in this case is not particularly limited, and may be set in consideration of the Tg of a resin component constituting the resin particles contained in the recorded matter and the like, for example. When considering the Tg of the resin component in the ink jet ink composition, the temperature may be set to 5.0°C or higher, and preferably 10.0°C or higher than the Tg of the resin component constituting the resin particles.

The surface temperature of the recording medium reached by heating in the post-heating step is 30.0°C or higher and 120.0°C or lower, preferably 40.0°C or higher and 100.0°C or lower, more preferably 50.0°C or higher and 95°C or lower, and even more preferably 70°C or higher and 90°C or lower. The surface temperature of the recording medium reached by heating in the post-heating step is particularly preferably 80°C or higher. When the temperature of the recording medium is within such a range, the resin contained in the recorded matter can be formed into a film and flattened, and the obtained image can be dried and more sufficiently fixed.

The recording method according to the present embodiment may include a paper discharging step of discharging the recording medium after recording to a paper output tray. Paper discharging may be performed to the paper output tray or the like. In addition, the recording method may include a stacking step of stacking recording media, which are a plurality of discharged sheets of cut paper, on the paper output tray after recording. When curls significantly occur, there is a tendency for a plurality of recording media not to be neatly stacked, or for the recording media to jump out from the paper output tray in the stacking step, but the recording method of the present embodiment has excellent curl inhibition, and can prevent such problems in the stacking step, which is preferable.

### 2.3. Effects, etc.

The recording method of the present embodiment can inhibit the clogging of the ink jet nozzles, improve the filling and the fixability of the ink coating film in the obtained recorded matter, and inhibit curls of the recorded matter.

### 3. Recording Apparatus

The ink jet recording apparatus that can be preferably used for the ink jet recording method according to the present embodiment will be described.

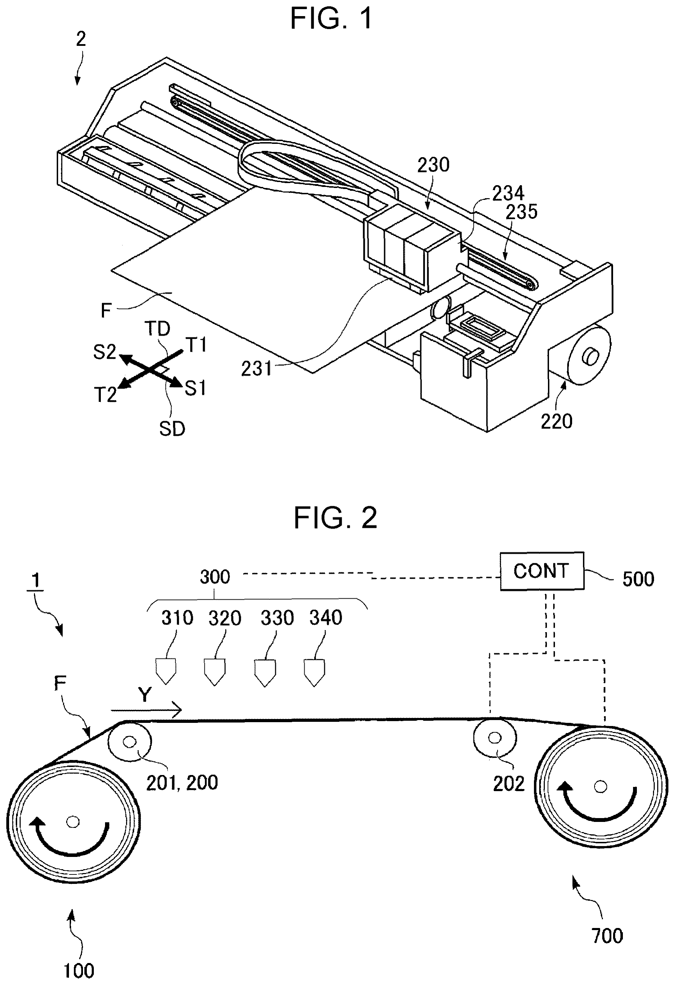

FIG. 1 shows a perspective view of a serial printer as an example of the ink jet recording apparatus. As shown in FIG. 1, a serial printer 20 includes a transport section 220 and a recording section 230. The transport section 220 transports a recording medium F fed to the serial printer to the recording section 230, and discharges the recording medium after recording to the outside of the serial printer. Specifically, the transport section 220 includes feed rollers, and transports the fed recording medium F in a transport direction TD.

In addition, the recording section 230 includes a carriage 234 on which an ink jet head 231 having a nozzle that ejects the ink jet ink composition to the recording medium F sent from the transport section 220 and a nozzle that ejects another composition as needed is mounted, and a carriage movement mechanism 235 that moves the carriage 234 in a scanning direction SD of the recording medium F.

When the serial printer is used, a head having a length less than the width of the recording medium is provided as the ink jet head 231, and recording is performed while the head moves in the scanning direction SD intersecting with the transport direction TD of the recording medium F. In the serial printer, the ink jet head 231 is mounted on the carriage 234, which moves in a predetermined direction, and ejects the ink jet ink composition onto the recording medium while moving along with the movement of the carriage 234. The recording medium may be transported between each scanning.

The ink jet recording apparatus is not limited to the printer of the serial type and may be a printer of the line type. FIG. 2 is a schematic side view of a line printer as another example of the ink jet recording apparatus. As shown in FIG. 2, a line printer 1 includes a feeding section 100, a transport mechanism 200 for transporting the recording medium in the transport direction, a line head 300 that ejects the ink to attach the ink to the recording medium, a controller 500, and a discharge section 700.

The transport mechanism is a mechanism for transporting the recording medium in the transport direction. In FIG. 2, the roll-shaped recording medium F is supplied from the feeding section 100 to the transport mechanism 200, and the transport mechanism 200 is configured to transport the recording medium F fed from the feeding section 100 to the line head 300. Specifically, the transport mechanism 200 includes a first feed roller 201 and a second feed roller 202 and is configured to transport the fed recording medium F to the line head 300 downstream in the transport direction. As a transport method of the transport mechanism 200, a well-known method in the related art can be appropriately used, or one or a plurality of rollers, a belt fed by a roller, or the like may be used.

The line printer 1 includes the line head 300 having a length corresponding to the width of the recording medium F. The line head 300 may be configured with a plurality of line heads. In FIG. 2, the line head 300 is configured with a first line head 310, a second line head 320, a third line head 330, and a fourth line head 340. The first line head 310, the second line head 320, the third line head 330, and the fourth line head 340 will be also simply referred to as the line head 300 when they are not required to be distinguished from each other.

The line head 300 includes a cavity that accommodates the ink jet ink composition (another composition or the like as needed), an ejection driving section that is provided for each cavity, and a nozzle that ejects the ink or the like. A plurality of cavities and a plurality of ejection driving sections and nozzles provided for each cavity may be provided in one head independently of each other. The ejection driving section can be formed using an electromechanical conversion element such as a piezoelectric element that mechanically deforms to change the volume of the cavities, an electrothermal conversion element that emits heat to generate air bubbles in the ink and ejects the ink, or the like.

In the line printer, the head is fixed and (substantially) does not move, and recording is performed in a single scanning of the ink jet head. The line printer is more advantageous than the serial printer in terms of a high recording speed.

By the serial printer 20 or the line printer 1, the recording medium (recorded matter) to which the ink jet ink composition and the other composition as needed are attached is obtained.

The obtained recorded matter may be further dried by an appropriate drying unit as needed. In addition, when the obtained recorded matter has a long form, the recorded matter may be cut into single sheets by an appropriate cutting unit. Further, the cut recorded matter may be stacked on an appropriate tray and collected.

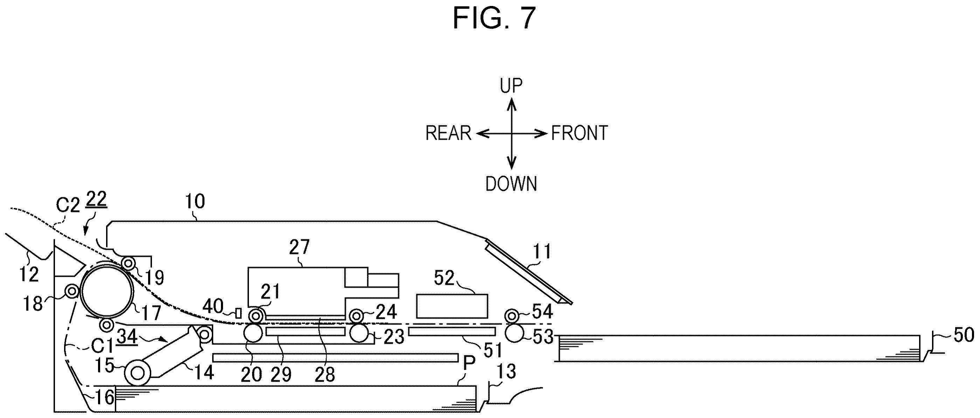

FIG. 7 shows a schematic side view of an example of another ink jet recording apparatus for use in the present embodiment. The ink jet recording apparatus includes a rectangular box-shaped main frame 10. Hereinafter, the right side in FIG. 1 is defined as the front side of the ink jet recording apparatus, and the left side in FIG. 1 is defined as the rear side of the ink jet recording apparatus.

An operation panel 11 that is a user interface is provided on a front side surface of the main frame 10. An operation switch and a liquid crystal panel are provided on the operation panel 11. In addition, a paper output tray 50 that is extendable and on which printed paper P is mounted is provided at a front portion of the main frame 10. The paper output tray 50 can be accommodated inside the ink jet recording apparatus when the paper P is not mounted. In the case of continuously printing on a large number of sheets of recording paper P, the large number of sheets of paper P can be stacked and mounted on the paper output tray 50. For example, the number of sheets is 10 or more, 30 or more, 50 or more, or 70 to 500.

Furthermore, an opening/closing type manual paper feed port cover 12 is provided at an upper rear portion of the main frame 10. By opening this manual paper feed port cover 12, a manual paper feed port 22 for manually inserting the paper P is opened.

A paper feed tray 13 that can accommodate a large number of sheets of paper P in a stacked state is detachably provided at a lower portion of the main frame 10. In addition, a feeding mechanism 34 that feeds the paper P in the paper feed tray 13 is provided at an upper portion of the paper feed tray 13 in the main frame 10. The feeding mechanism 34 includes a swing arm 14 that is pivotally supported for swinging on the main frame 10, and a pickup roller 15 that is provided at a distal end portion of the swing arm 14. The pickup roller 15 sends the topmost sheet of the stack of the paper P accommodated in the paper feed tray 13 backward in response to the rotation of the pickup roller 15. A rear wall surface of the paper feed tray 13 is a separation inclined surface 16 that is inclined rearward as it is directed upward.

In this ink jet recording apparatus, a transport path C1 of the paper P fed from the paper feed tray 13 is formed to be directed from the stack of the paper P in the paper feed tray 13 toward the separation inclined surface 16, to be directed upward by the separation inclined surface 16, and to be folded forward toward the paper output tray 50. In addition, a transport path C2 of the paper P fed from the manual paper feed port 22 is common to the transport path C1 after being merged with a portion of the transport path C1 immediately after the folding from the manual paper feed port 22. It is noted that, hereinafter, the paper feeding side in the transport paths C1 and C2 is referred to as upstream of the transport paths C1 and C2, and the paper discharging side is referred to as downstream of the transport paths C1 and C2.

An intermediate roller 17 as an example of the second transport roller is provided downstream of the separation inclined surface 16 in the transport path C1. A separation roller 18 that rotates in response to the rotation of the intermediate roller 17 is provided adjacent to the intermediate roller 17. An outer peripheral surface of the separation roller 18 is formed of an elastic material and is pressed against the intermediate roller 17 with a predetermined force. As a result, an appropriate rotation resistance is applied to the paper P passing between the intermediate roller 17 and the separation roller 18, thereby preventing multiple feed of the paper P.

Furthermore, an intermediate assist roller 19 that rotates in response to the rotation of the intermediate roller 17 is provided downstream of the separation roller 18 in the transport path C1 in a state of being pressed against the intermediate roller 17.

In addition, a paper feed roller 20 as an example of the first transport roller is provided downstream of the intermediate assist roller 19 in the transport paths C1 and C2. A paper feed assist roller 21 that rotates in response to the rotation of the paper feed roller 20 is pressed against the paper feed roller 20. It is noted that a paper detection sensor 40 that detects the presence or absence of the paper P at the position thereof is provided near the paper feed roller 20 upstream of the transport paths C1 and C2. As the paper detection sensor 40, for example, an optical sensor is used.

Furthermore, paper discharge rollers 23 and 53 are provided downstream of the paper feed roller 20 in the transport paths C1 and C2. Paper discharge assist rollers 24 and 54 that rotate in response to the rotation of the paper discharge rollers 23 and 53 are pressed against the paper discharge rollers 23 and 53, respectively.

A head unit 27 is provided inside the main frame 10. An ink jet type recording head 28 is provided at a lower portion of the head unit 27. The recording head 28 is a line type ink jet head including a nozzle row having a length across the entire width of the paper P in the width direction. The nozzle surface of the line type ink jet head is provided with a nozzle row for ejecting the above-described ink jet ink composition. It is noted that, in a case of printing, the recording head 28 is positioned above a section between the paper feed roller 20 and the paper discharge roller 23 in the transport paths C1 and C2.

A support base 29 for supporting the paper P is provided at a position facing the recording head 28 inside the main frame 10. It is noted that the head unit 27 is provided so as to move up and down in the up and down direction in the figure, and the spacing between the recording head 28 and the support base 29 can be adjusted (hereinafter, referred to as gap adjustment) in response to the moving up and down of the head unit 27.

A heating device 52 is provided inside the main frame 10. The heating device 52 includes a fan that blows warm air to the paper P. The heating device 52 is positioned above a section between the paper discharge roller 23 and the paper discharge roller 53 in the transport paths C1 and C2. A paper discharge passage 51 that supports the paper P is provided at a position facing the heating device 52 inside the main frame 10. It is noted that a heat transfer type heating device may be provided in the paper discharge passage 51, or a radiation type heating device may be provided for the heating device 52.

This ink jet recording apparatus includes a motor that is not shown in the figure as a power source, and this motor rotates the paper feed roller 20 and the paper discharge rollers 23 and 53. The rotation direction of the paper feed roller 20 and the paper discharge rollers 23 and 53 is switched in response to the rotation direction of the motor. In addition, the power of the motor is also transmitted to the intermediate roller 17, and the rotation direction of the intermediate roller 17 is configured to be maintained constant.

In addition, the ink jet recording apparatus includes a controller that is not shown in the figure that governs various controls of the ink jet recording apparatus. The controller is coupled to the operation panel 11, confirms an operation status of the operation switch provided on the operation panel 11, and performs display control of the liquid crystal panel provided on the operation panel 11.

### 4. Examples and Comparative Examples

Hereinafter, the present disclosure will be described in more detail with reference to Examples and the like, but the present disclosure is not limited to these Examples. Hereinafter, "part" and "%" are based on mass unless otherwise specified. Unless otherwise specified, the evaluation is carried out in an environment of a temperature of 25°C and a relative humidity of 40.0%. The pigments and resins are the contents of their solid contents.

### 4.1. Preparation of Ink Jet Ink Composition

Each component is put into a container and mixed so as to have the compositions in Table 1 to Table 3, and the mixture is stirred for 2 hours, and then filtered using a 5.0 µm PTFE membrane filter to obtain ink jet ink compositions of Examples and Comparative Examples. The numerical values in the tables indicate percentage (%) by mass. Pure water is used as water, and water is added such that the mass of each composition is 100% by mass. For a pigment and a dispersant resin, dispersion liquids described below are prepared and used.

Among the components shown in Tables 1 to 3, the components other than the compound names are as follows:
·Dispersion liquid A: black pigment carbon black (see below)
·Dispersion liquid B: cyan pigment C.I. Pigment Blue 15:3 (see below)
·Dispersion liquid C: magenta pigment C.I. Pigment Violet 19 (see below)
·Dispersion liquid D: yellow pigment C.I. Pigment Yellow 74 (see below)
·HEP: 1-(2-hydroxyethyl)-2-pyrrolidone
·TEG: triethylene glycol
·Olfine E1010 (product name, manufactured by Nissin Chemical Co., Ltd., acetylene glycol-based surfactant, HLB value: 13 to 14)
·Surfynol 104: acetylene glycol-based surfactant (manufactured by Air Products and Chemicals, Inc., HLB value: 4)
·BYK-348: silicone-based surfactant (manufactured by BYK Japan KK)
·Mowinyl 6820: acrylic-based resin emulsion (manufactured by Japan Coating Resin Co., Ltd., binder resin)
·TEA: triethanolamine

The pigment dispersion liquids prepared as follows are used.

Dispersion liquid A: Pure water is added to 20% by mass of the pigment, 5% by mass of a dispersant resin (a sodium hydroxide-neutralized product of a styrene-acrylic acid copolymer) (acid value: 150 mgKOH/g, molecular weight: 10,000) to make the entire 100% by mass, which is stirred and mixed to obtain a mixture. This mixture is put into a wet sand mill filled with 0.3 mm zirconia beads and subjected to a dispersion treatment for 6 hours. Thereafter, the zirconia beads were removed by a separator, and the resultant is filtered through a cellulose acetate filter having a pore diameter of 3.0 µm to obtain each pigment dispersion liquid. The styrene-acrylic acid copolymer is a water-soluble polymer generally used as a dispersant for a pigment.

A dispersion liquid B to a dispersion liquid D are obtained in the same manner by changing the pigment as described above. When the volume average particle size D50 of the dispersion of each dispersion liquid is measured with a particle size distribution analyzer, all are 100 nm.

### 4.2. Evaluation Method

### 4.2.1 Solubility in Water (20°C Environment)

The solubilities of not only the substances used in Examples and Comparative Examples but also some moisturizers and organic solvents are measured in accordance with the following procedures (1) to (6). It is noted that "solubility" as used herein is a concept different from "solubility," which is often described in SDS.
(1) Preparation of sample: The substance the solubility of which is to be measured is accurately weighed.
(2) Preparation of solvent: A certain amount of water is prepared. At this time, a thermostatic bath is used to keep the temperature constant.
(3) Mixing: The weighed substance is added to the water, which is stirred until the substance is completely dissolved.
(4) Preparation of saturated solution: The substance is added until the substance is no longer completely dissolved, and the solution is saturated.
(5) Filtration: The saturated solution is filtered to remove undissolved solids.
(6) Measurement of concentration: A part of the filtered saturated solution is taken to measure the concentration of the dissolved substance using an appropriate analytical method (for example, gravimetric analysis or titration) to calculate the solubility of the substance in 1 L of water.

Table 4 shows the solubilities (20°C water solubilities (g/L)), melting points (°C), and molecular weights (M.W. (g/mol)) of some moisturizers and organic solvents. A case in which the substance is dissolved even when the substance is added is denoted by mixed.

### 4.2.2. Printing

Each ink jet ink composition of Examples and Comparative Examples is introduced into an ink jet printer (a modified machine of LX-10050 manufactured by Seiko Epson Corporation), with an ink droplet amount of 6.5 ng/dot and with a basic resolution of 600 × 1,200 dpi, the dot density is adjusted (the number of ink droplets per pixel is adjusted) such that the attachment amount (application amount) in a solid pattern becomes 6.5 mg/inch².

The recording medium is Copy + Paper (plain paper) or OK Top Coat + (coated paper, basis weight: 104.7), and A4 size cut paper is used each. Primary drying is not performed, and post-heating is performed by heating at 70°C for 1 minute.

### 4.2.3. Continuous Printing Stability

Continuous printing of 1,000 sheets is performed by A4 single-sided printing. The recording medium after printing is discharged to a paper output tray and stacked thereon. In the evaluation, a monochrome pattern specified in ISO/IEC19752 is printed. Copy + paper (plain paper) is used as the recording medium, a nozzle check pattern is printed after printing, and it is checked whether there is printing deviation or non-ejection after the continuous printing. Evaluation is made according to the following criteria, and the results are described in the tables. It is noted that printing deviation is defined as a case where there is a positional deviation equal to or larger than half the distance between adjacent nozzles.
A: There is no printing deviation or non-ejection.
B: Printing deviation or non-ejection occurs in less than 50% of the nozzles.
C: Non-ejection or deviation occurs in 50% or more and less than 70% of the nozzles.
D: Non-ejection or deviation occurs in 70% or more of the nozzles.

### 4.2.4. Clogging Recoverability

In a state where the ink jet head is displaced from the position of a cap provided in the printer and the head is not capped, the printer is left to stand for 7 days in an environment at 40°C and a humidity of 20%. After being left to stand, as cleaning of the ink jet head, every time a suction operation of the ink in the nozzles is performed once, the number of nozzles that cannot eject the ink is counted, and the cleaning operation is repeated until all the nozzles are recovered. Then, the clogging recoverability is evaluated based on the number of times of cleaning when all the nozzles are recovered, and the results are described in the tables.
A: All the nozzles are recovered by 2 times or less of cleaning.
B: All the nozzle are recovered by 3 or 4 times of cleaning.
C: All the nozzles are recovered by 5 or 6 times of cleaning.
D: Not all the nozzles are recovered even if cleaning is repeated.

### 4.2.5. Color Developing Properties

A test pattern for each ink alone is recorded on a recording medium with a recording apparatus such that the ink application amount becomes 6.5 [ng/inch²]. The OD value is evaluated by measurement with a colorimeter: X-Rite i1 (manufactured by X-Rite Inc.). The recording medium is Copy + Paper (plain paper) or OK Top Coat + (coated paper). Evaluation is made as follows, and the results are described in the tables.
in the case of printing on plain paper
   A: OD ≥ 1.33
   B: 1.33 > OD ≥ 1.25
   C: 1.25 > OD ≥ 1.20
   D: 1.20 > OD
in the case of printing on coated paper
   A: OD ≥ 1.70
   B: 1.70 > OD ≥ 1.60
   C: 1.60 > OD ≥ 1.45
   D: 1.45 > OD

### 4.2.6. Filling

Under the conditions of the color developing properties test, a recording medium is set, a solid pattern is printed, and the printed matter is visually observed. Evaluation is made according to the following criteria, and the results are shown in the tables. The recording medium is Copy + paper (plain paper) or OK Top Coat + (coated paper, basis weight: 104.7). Here, filled refers to whether the ink uniformly fills the surface of the base material in the solid pattern, and the base cannot be seen.

### AA: Filled (The ink is uniformly spread.)

A: The base is slightly seen, but there is no problem.
B: The base is conspicuous, but it is allowable.
C: The base is conspicuous. Furthermore, the color of the solid pattern looks whitish. 4.2.7. Secondary Curl Test

Under the conditions of the color developing properties test, a recording medium is set, a solid pattern is printed, the printed matter is left to stand for 1 week in a normal temperature and normal humidity environment, and then the warping height (curl height) of the four corners of the medium is measured. The average value of the measurement results is evaluated according to the following criteria, and the results are described in the tables.
A: The curl height is 10 mm or less.
B: The curl height is more than 10 mm and 15 mm or less.
C: The curl height is more than 15 mm and 50 mm or less.
D: The curl height is more than 50 mm.

### 4.2.8. Tape Peeling Properties

Under the conditions of the color developing properties test, a recording medium is set, a solid pattern is printed, the printed matter is dried overnight in a normal temperature and normal humidity environment, a cellophane tape is attached to the printed surface and then peeled off, and it is visually checked whether the ink is peeled off from the surface of the medium. The average value of the measurement results is evaluated according to the following criteria, and is described in the tables. It is noted that the tape peeling properties correlate with the fixability of the ink.
A: The ink is not peeled off at all.
B: The ink is slightly peels off, but it is allowable.
C: The ink is peeled off, and the base is conspicuous.

### 4.3. Evaluation Results

It can be seen from Table 1 to Table 3 that, the ink jet ink composition of each of Examples, in which the ink jet ink composition is a water-based ink jet ink composition and contains a moisturizer A having a solubility in water at 20°C of 850 g/L or more and a melting point of higher than 25°C, an organic solvent A that is a 1,2-alkanediol having a surface tension at 25°C of 34 mN/m or less, and an acetylene glycol-based surfactant, wherein the content of the organic solvent A is 4% by mass or more with respect to the total mass of the ink composition, and the ink jet ink composition does not contain a polyol organic solvent having a standard boiling point of higher than 280°C in an amount of more than 2.5% by mass with respect to the total mass of the ink composition, can inhibit the clogging of the nozzles, improve the filling and the fixability of the ink coating film in the obtained recorded matter, and also inhibit curls of the recorded matter.

The present disclosure includes a configuration substantially the same as the configuration described in the embodiment, for example, a configuration having the same function, method, and result, or a configuration having the same purpose and effect. Further, the present disclosure includes configurations in which non-essential parts of the configuration described in the embodiments are replaced. In addition, the present disclosure includes configurations that achieve the same effects or configurations that can achieve the same objects as those of the configurations described in the embodiment. Furthermore, the present disclosure includes configurations in which a known technique is added to the configurations described in the embodiment.

The following contents are derived from the above-described embodiments and modifications.

The ink jet ink composition is a water-based ink jet ink composition and contains a moisturizer A having a solubility in water at 20°C of 850 g/L or more and a melting point of higher than 25°C, an organic solvent A that is a 1,2-alkanediol having a surface tension at 25°C of 34 mN/m or less, and an acetylene glycol-based surfactant, wherein the content of the organic solvent A is 4% by mass or more with respect to the total mass of the ink composition, and the ink composition does not contain a polyol organic solvent having a standard boiling point of higher than 280°C in an amount of more than 2.5% by mass with respect to the total mass of the ink composition.

This ink jet ink composition, by adopting the above configuration, can inhibit the clogging of the ink jet nozzles, improve the filling and the fixability of the ink coating film in the obtained recorded matter, and also inhibit curls of the recorded matter.

The moisturizer A has a predetermined water solubility or more, has high moisture-retaining properties, and contributes to the ejection stability, and at the same time, has a relatively high melting point, tends to decrease in the fluidity along with the drying of the ink, and thus also contributes to the improvement of the ink drying properties. In addition, even if the moisturizer A remains in the ink coating film of the recorded matter, it is unlikely to reduce the abrasion resistance (fixability) of the image. Furthermore, although the moisturizer A is a moisturizer, it has a relatively high melting point and is solid at room temperature, and thereby contributes to curl inhibition.

In addition, when the organic solvent A is contained in an amount of 4% by mass or more, the ink droplets ejected from the nozzles tend to be easily split, and it is presumed that the coverage area increases due to the ink droplets landing in a split manner. As a result, in the case of being attached to coated paper or the like, the filling of the ink coating film can be improved. In addition, the organic solvent A is an organic solvent that does not deteriorate the drying properties very much compared to other organic solvents, and can improve the ink drying properties compared to other organic solvents.

In addition, when the acetylene glycol-based surfactant is contained, the wetting and spreading properties of the ink especially in the case of being attached to coated paper or the like can be improved, and the filling can be made excellent.

Furthermore, when the polyol organic solvent having a standard boiling point of higher than 280°C is not contained in an amount of more than 2.5% by mass with respect to the total mass of the ink composition, the moisture-retaining properties and the ejection stability can be made more excellent. The polyol organic solvent having a standard boiling point of higher than 280°C advantageously has particularly high moisture-retaining properties, but may excessively reduce the ink drying properties, and is thus not contained in an amount of more than 2.5% by mass.

The ink jet ink composition can exhibit the effects obtained by the respective components in an additive or synergistic manner.

In the ink jet ink composition, the content of the moisturizer A may be 0.5% by mass or more and 10% by mass or less with respect to the total mass of the ink composition.

This ink jet ink composition more easily inhibits the clogging of the nozzles.

In the ink jet ink composition, the content of the organic solvent A may be 5% by mass or more and 15% by mass or less with respect to the total mass of the ink composition.

This ink jet ink composition can more appropriately maintain the drying properties of the ink coating film, and further improve the filling of the image.

In the ink jet ink composition, the polyol organic solvent is contained, and the content of the polyol organic solvent may be 2.5% by mass or less with respect to the total mass of the ink composition.

This ink jet ink composition can make the moisture-retaining properties and the ejection stability more excellent.

In the ink jet ink composition, the moisturizer A may have a solubility in water at 20°C of 850 g/L or more and 2,000 g/L or less.

This ink jet ink composition can further improve the curl inhibition, the drying properties and/or the moisture-retaining properties.

In the ink jet ink composition, the moisturizer A may include one or more selected from a betaine and a lactam.

This ink jet ink composition can more appropriately maintain the drying properties of the ink composition, and further improve the filling of the image.

The ink jet ink composition may further contain a binder resin.

This ink jet ink composition can produce an ink coating film with better fixability.

The ink jet ink composition may further contain a coloring material.

This ink jet ink composition can form the image with the ink coating film.

The ink jet ink composition may be used for recording on a low-absorbent recording medium having paper as a base material.

This ink jet ink composition can improve the filling and the fixability of the ink coating film even for the low-absorbent recording medium having paper as a base material, and also sufficiently inhibit curls of the recorded matter.

In the ink jet ink composition, the low-absorbent recording medium may be cut paper.

This ink jet ink composition can sufficiently inhibit curls of the recorded matter even for a recording medium in which curls are more likely to occur.

A recording method includes an ink attaching step of ejecting the above-described ink jet ink composition from an ink jet head to attach the ink jet ink composition to a recording medium.

This recording method can inhibit the clogging of the ink jet nozzles, improve the filling and the fixability of the ink coating film in the obtained recorded matter, and also inhibit curls of the recorded matter.

In the recording method, the ink attaching step may be performed by scanning that attaches the ink composition while moving a relative position between the recording medium and the ink jet head, and the ink jet head may be a line head in which the length of the ink jet head in a direction intersecting the direction of the moving is equal to or more than the length of a recording area of the recording medium in the direction intersecting the direction of the moving.

This recording method can sufficiently inhibit curls of the recorded matter even in a situation in which curls are more likely to occur.

In the recording method, the recording medium may be cut paper, and the recording method may include a stacking step of discharging a plurality of recording media on which the ink attaching step has been performed and stacking the recording media on a paper output tray.

This recording method can sufficiently inhibit curls of the recorded matter even in a situation in which curls are more likely to occur.

The recording method may include a heating step of heating the ink composition attached to the recording medium.

This recording method can sufficiently inhibit curls of the recorded matter even in a situation in which curls are more likely to occur.

## Claims

1. An ink jet ink composition that is a water-based ink jet ink composition, the ink jet ink composition comprising:
a moisturizer A having a solubility in water at 20°C of 850 g/L or more and a melting point of higher than 25°C;
an organic solvent A that is a 1,2-alkanediol having a surface tension at 25°C of 34 mN/m or less; and
an acetylene glycol-based surfactant, wherein
a content of the organic solvent A is 4% by mass or more with respect to a total mass of the ink composition, and
the ink composition does not contain a polyol organic solvent having a standard boiling point of higher than 280°C in an amount of more than 2.5% by mass with respect to the total mass of the ink composition.

2. The ink jet ink composition according to claim 1, wherein a content of the moisturizer A is 0.5% by mass or more and 10% by mass or less with respect to the total mass of the ink composition.

3. The ink jet ink composition according to claim 1, wherein a content of the organic solvent A is 5% by mass or more and 15% by mass or less with respect to the total mass of the ink composition.

4. The ink jet ink composition according to claim 1, wherein the polyol organic solvent is contained, and a content of the polyol organic solvent is 2.5% by mass or less with respect to the total mass of the ink composition.

5. The ink jet ink composition according to claim 1, wherein the moisturizer A has a solubility in water at 20°C of 850 g/L or more and 2,000 g/L or less.

6. The ink jet ink composition according to claim 1, wherein the moisturizer A includes one or more selected from a betaine and a lactam.

7. The ink jet ink composition according to claim 1, further comprising a binder resin.

8. The ink jet ink composition according to claim 1, further comprising a coloring material.

9. The ink jet ink composition according to claim 1, wherein the ink composition is used for recording on a low-absorbent recording medium having paper as a base material.

10. The ink jet ink composition according to claim 9, wherein the low-absorbent recording medium is cut paper.

11. A recording method comprising an ink attaching step of ejecting the ink jet ink composition according to claim 1 from an ink jet head to attach the ink jet ink composition to a recording medium.

12. The recording method according to claim 11, wherein
the ink attaching step is performed by scanning that attaches the ink composition while moving a relative position between the recording medium and the inkjet head, and
the ink jet head is a line head in which a length of the ink jet head in a direction intersecting a direction of the moving is equal to or more than a length of a recording area of the recording medium in the direction intersecting the direction of the moving.

13. The recording method according to claim 11, wherein
the recording medium is cut paper, and
the recording method includes a stacking step of discharging a plurality of recording media on which the ink attaching step has been performed and stacking the recording media on a paper output tray.

14. The recording method according to claim 11, further comprising a heating step of heating the ink composition attached to the recording medium.
